# EUROPÄISCHE PATENTSCHRIFT

(11) **EP 4 012 362 B1**
(45) Veröffentlichungstag und Bekanntmachung des Hinweises auf die Patenterteilung: **23.08.2023**
(21) Anmeldenummer: 20213424.3
(22) Anmeldetag: 11.12.2020
(51) Int. Cl.: G01J 5/02, G01J 5/06, G01J 5/22, G01J 5/20, G01J 5/03, G01J 5/00, H04N 5/33

(54) **SYSTEM UND VERFAHREN ZUR ERMITTLUNG EINES WÄRMEBILDS**
SYSTEM AND METHOD FOR DETERMINING A THERMAL IMAGE
SYSTÈME ET PROCÉDÉ DE DÉTERMINATION D'UNE IMAGE THERMIQUE

(43) Veröffentlichungstag der Anmeldung: 15.06.2022
(73) Patentinhaber: Basler AG, 22926 Ahrensburg (DE)
(72) Erfinder: WINGERT, Julian, 25421 Pinneberg (DE)
(74) Vertreter: Bird & Bird LLP

(56) Entgegenhaltungen:
- EP-A2- 0 964 231
- DE-T2- 69 216 862
- US-A1- 2010 031 992
- US-A1- 2013 170 517

## Beschreibung

Die Erfindung betrifft ein System und ein Verfahren zur Ermittlung eines Wärmebilds.

Aus dem Stand der Technik sind Systeme zur Ermittlung eines Wärmebilds grundsätzlich bekannt. Derartige Systeme können beispielsweise von einer Wärmebildkamera gebildet sein oder zumindest eine Wärmebildkamera umfassen. Mittels eines derartigen Systems zur Ermittlung eines Wärmebilds kann Infrarotstrahlung über das zugehörige Detektorarray erfasst werden und ein Wärmebild, basierend auf der von dem Detektorarray erfassten Infrarotstrahlung, erzeugt werden. Der Wellenlängenbereich der Infrarotstrahlung ist vorzugsweise zwischen 3 Mikrometer und 20 Mikrometer. Mittels der bekannten Systeme können beispielsweise die Temperaturen eines Umgebungsbereiches erfasst und hierzu ein Wärmebild ermittelt werden, das die Temperaturen im Umgebungsbereich optisch repräsentiert.

Das Detektorarray des Systems wird oftmals auch als Detektor oder als Wärmebildsensor bezeichnet. Das Detektorarray weist eine Vielzahl von bolometrischen Messzellen und einen Grundkörper auf. Aufgrund der bolometrischen Messzellen kann das Detektorarray auch als bolometrisches Detektorarray bezeichnet sein. Jede bolometrische Messzelle ist zur Erfassung von Infrarotstrahlung ausgebildet. Insbesondere ist jede Messzelle zur Erfassung von Infrarotstrahlung im Wellenlängenbereich des Nah-, Mittel- und/oder Ferninfrarotwellenlängenbereich ausgebildet. So kann es beispielsweise vorgesehen sein, dass jede bolometrische Messzelle Infrarotstrahlung im Wellenlängenbereich zwischen 3 Mikrometer und 20 Mikrometer erfassen kann. Jede bolometrische Messzelle kann also nach Art einer bolometrischen Sensormesszelle zur Erfassung von Infrarotstrahlung ausgebildet sein.

Die Vielzahl der bolometrischen Messzellen ist vorzugsweise in einer Zeile hintereinander oder rasterförmig angeordnet, so dass mehrere nebeneinander angeordnete Messzeilen bestehen. Die Messzellen sind oberhalb von dem Grundkörper des Detektorarrays angeordnet, wobei jede Messzelle über eine zugehörige Verbindung mit dem Grundkörper verbunden ist, da der Grundkörper vorzugsweise eine Auswerteschaltung aufweist, die dazu ausgebildet ist, ein Messsignal zu erzeugen. Neben der Auswerteschaltung oder alternativ zu der Auswerteschaltung kann der Grundkörper auch weiteres Material, insbesondere SiliziumMaterial, aufweisen. Der Grundkörper hat eine Wärmekapazität. Wird das Detektorarray mit den zugehörigen Messzellen auf einen Körper gerichtet, so dass Wärmestrahlung von dem Körper auf die Messzellen trifft, entsteht ein Wärmestrom, der von den Messzellen über die zugehörigen Verbindungen zu dem Grundkörper gelangt. Aufgrund der Wärmekapazität des Grundkörpers wird deshalb Wärmeenergie von dem Grundkörper gespeichert. Trifft Wärmestrahlung des Körpers über einen längeren Zeitraum auf die Messzellen, erwärmt sich der Grundkörper des Detektorarrays so stark, dass die von dem Grundkörper gespeicherte Wärmeenergie zu einer Verfälschung von Messungen führt, wenn das Detektorarray im Anschluss verwendet wird, um die Temperatur eines anderen Körpers zu erfassen. Denn die vom Grundkörper des Detektorarrays gespeicherte Wärmeenergie kann über die Verbindungen zu den Messzellen wieder zurückströmen, was zu einer Verfälschung der von den Messzellen erfassten Temperatur führt. Ein Detektorarray basierend auf einer Vielzahl von bolometrischen Messzellen ist zum Beispiel aus der EP 0 964 231 A2 bekannt. Das Dokument beschreibt zudem das Problem, dass Wärme zwischen jeder Messzelle und dem Grundkörper übertragen wird und sich dies in einem thermischen Leistungsrauschen niederschlägt.

Der Erfindung liegt deshalb die Aufgabe zugrunde, ein System und ein Verfahren bereitzustellen, das eine schnelle und zugleich präzise Ermittlung eines Wärmebilds erlaubt. Gemäß einem ersten Aspekt der Erfindung wird die genannte Aufgabe durch ein System mit den Merkmalen des Anspruchs 1 gelöst. Vorgesehen ist also ein System zur Erzeugung eines Wärmebilds. Das System weist ein Detektorarray, eine Prozessoreinheit und eine Signalschnittstelle auf. Das Detektorarray weist eine Vielzahl von bolometrischen Messzellen und einen Grundkörper auf, der eine vorbestimmte, thermische Wärmekapazität aufweist. Jede Messzelle ist über eine zugehörige Verbindung, die eine vorbestimmte, thermische Leitfähigkeit aufweist, direkt oder indirekt mit dem Grundkörper verbunden, so dass Wärme zwischen jeder Messzelle und dem Grundkörper übertragbar ist. Außerdem ist jede Messzelle zur Erfassung von Infrarotstrahlung in einem der jeweiligen Messzelle zugeordneten Erfassungsbereich und als Zeitverzögerungsglied mit einer Zeitkonstante zur Erzeugung eines die erfasste Infrarotstrahlung repräsentierenden Messwerts ausgebildet, der eine Temperatur im Erfassungsbereich der jeweiligen Messzelle repräsentiert und einen Messfehler umfasst, der durch einen Wärmstrom über die Verbindung der jeweiligen Messzelle zum Grundkörper verursacht ist. Das Detektorarray ist ausgebildet, Infrarotstrahlung periodisch mittels der zugehörigen Messzellen zu erfassen, ein Messsignal zu erzeugen, das die von den Messzellen erzeugten Messwerte repräsentiert, und das Messsignal an die Prozessoreinheit zu übertragen. Die Prozessoreinheit ist konfiguriert, eine vom Grundkörper gespeicherte Körperwärme, basierend auf der Wärmekapazität, auf der thermischen Leitfähigkeit und entweder direkt oder indirekt auf dem Messsignal zu ermitteln. Außerdem ist die Prozessoreinheit konfiguriert, für jeden aktuellen Messwert einer jeden Messzelle einen um die Zeitverzögerung der jeweiligen Messzelle kompensierten Prädiktionswert, basierend auf dem aktuellen Messwert der jeweiligen Messzelle und mindestens einem zeitlich vorangegangenen Messwert der gleichen Messzelle, zu ermitteln, so dass der jeweilige Prädiktionswert eine aktuelle, die Zeitverzögerung kompensierte Voraussagetemperatur im Erfassungsbereich der jeweiligen Messzelle repräsentiert. Außerdem ist die Prozessoreinheit konfiguriert, für jeden aktuellen Prädiktionswert einen um den Messwertfehler korrigierten Temperaturwert im Erfassungsbereich der jeweiligen Messzelle, basierend auf dem jeweiligen Prädiktionswert, auf der Wärmeleitfähigkeit und entweder direkt oder indirekt auf dem aktuellen Wert der Körperwärme zu ermitteln. Die Prozessoreinheit ist außerdem konfiguriert, ein Wärmebild basierend auf den aktuellen Temperaturwerten für die Erfassungsbereiche der Messzelle zu ermitteln. Die Signalschnittstelle ist ausgebildet, ein Bildsignal bereitzustellen, das das Wärmebild repräsentiert.

Bezüglich des Detektorarrays und der Messzellen wird auf die eingangs wiedergegebenen Erläuterungen in analoger Weise Bezug genommen. Das Detektorarray weist eine Vielzahl von bolometrischen Messzellen auf. Diese Vielzahl kann die gesamte Anzahl der bolometrischen Messzellen des Detektorarrays bilden und/oder sein. Jedoch ist es auch möglich, dass die Vielzahl von bolometrischen Messzellen des Detektorarrays eine Teilmenge aller bolometrischen Messzellen des Detektorarrays bildet und/oder ist. Dies kann beispielsweise dann der Fall sein, wenn mindestens eine Messzelle oder mehrere Messzellen des Detektorarrays nicht funktionsfähig sind. Diese Messzellen können auch als tote Messzellen bezeichnet sein. Die übrigen, nicht toten Messzellen des Detektorarrays können die genannte Vielzahl der Messzellen des Detektorarrays bilden. Jedoch kann auch eine andere vorbestimmte Untermenge der gesamten Messzellen die genannte Vielzahl der Messzellen des Detektorarrays bilden. Wenn im Folgenden auf eine bolometrischen Messzelle des Detektorarrays Bezug genommen wird, ist damit vorzugsweise eine Messzelle und/oder jede der Messzellen der genannten Vielzahl der Messzellen des Detektorarrays gemeint. Das Detektorarray kann beispielsweise mehr als 10.000 bolometrische Messzellen, vorzugsweise mehr als 50.000 bolometrische Messzellen aufweisen.

Jede Messzelle ist über eine zugehörige Verbindung direkt oder indirekt mit dem Grundkörper verbunden. Die jeweilige Verbindung weist eine Wärmeleitfähigkeit auf, so dass ein Teil der Wärme, die per Infrarotstrahlung in die jeweilige Messzelle eingeleitet wird, über die zugehörige Verbindung der jeweiligen Messzelle zu dem Grundkörper übertragbar ist. Der Grundkörper hat eine vorbestimmte thermische Wärmekapazität. Durch die Verbindung der jeweiligen Messzelle zum Grundkörper, die Wärmeleitfähigkeit der jeweiligen Verbindung und die thermische Wärmekapazität des Grundkörpers wirkt die jeweilige Messzelle wie ein Zeitverzögerungsglied mit einer Zeitkonstante zur Erzeugung eines die erfasste Infrarotstrahlung repräsentierenden Messwerts. Trifft Infrarotstrahlung auf eine Messzelle, so bestimmt nämlich die Wärmeleitfähigkeit der zugehörigen Verbindung, wie schnell Wärme von der Messzelle an den Grundkörper übertragen werden kann. Der daraus resultierende Wärmestrom von der Messzelle zum Grundkörper verursacht einen Temperaturanstieg des Grundkörpers. Dieser Anstieg ist im Verlauf exponentiell. Mit anderen Worten lädt sich der Grundkörper mit einem exponentiellen Verlauf mit Wärme auf.

Jede bolometrische Messzelle der Vielzahl der Messzellen des Detektorarrays ist deshalb als ein Verzögerungsglied mit einer Zeitkonstante ausgebildet. Somit kann jede bolometrische Messzelle der genannten Vielzahl der Messzellen des Detektorarrays als ein Verzögerungsglied erster Ordnung ausgebildet sein. Dies gilt zumindest bei einer vereinfachten Betrachtung der jeweiligen Messzelle. Grundsätzlich ist es jedoch auch möglich, dass jede bolometrische Messzelle als ein Verzögerungsglied einer höheren Ordnung ausgebildet ist. Bevorzugt wird jedoch ein Verzögerungsglied erster Ordnung für die jeweilige Messzelle betrachtet. Die Verzögerung tritt zwischen dem Auftreten einer Intensitätsänderung der Infrarotstrahlung an der Messzelle und dem von der jeweiligen Messzelle erzeugten Messwert auf. Jeder von der jeweiligen Messzelle erzeugter Messwert ist deshalb zeitverzögert. Die Zeitkonstante eines Verzögerungsglieds beschreibt hierbei die charakteristische Verzögerung. Die Zeitkonstante einer jeweiligen Messzelle kann beispielsweise durch das Produkt aus dem thermischen Widerstand der zu der jeweiligen Messzelle zugehörigen Verbindung und der thermischen Kapazität der jeweiligen Messzelle bestimmt sein. Der thermische Widerstand der jeweiligen Verbindung ist der Kehrwert der thermischen Leitfähigkeit der jeweiligen Verbindung.

Vorzugsweise ist jede Messzelle über zwei Elektroden als die zugehörige Verbindung zu der jeweiligen Messzelle mit dem Grundkörper verbunden. Die Elektroden können beispielsweise aus Kupfer, Gold oder einem anderen Metall hergestellt sein. Der Grundkörper kann eine Ausleseschaltung aufweisen, die zur Erzeugung des Messwerts der jeweiligen Messzelle ausgebildet ist. Der Grundkörper kann Siliziummaterial und/oder weitere Bauteile umfassen. Oftmals ist der Grundkörper durch ein Vakuum von den Messzellen beabstandet, wobei die Verbindungen zwischen den Messzellen und dem Grundkörper durch das Vakuum hindurch ragen. Die thermisch leitfähige Verbindung zwischen den Messzellen und dem Grundkörper ist deshalb zumindest im Wesentlichen oder ausschließlich durch die zuvor genannten Verbindungen zwischen den Messzellen und dem Grundkörper gebildet. Das Vakuum zwischen den Messzellen und dem Grundkörper hat hingegen eine thermisch isolierende Wirkung. Außerdem kann es vorgesehen sein, dass auf dem Grundkörper jeweils ein Reflektor gegenüber zu jeder Rückseite der Messzelle angeordnet ist.

Die Auswerteschaltung kann funktional den Messzellen zugeordnet sein, wohingegen die Auswerteschaltung körperlich dem Grundkörper zugeordnet ist. Die Wärmekapazität der Auswerteschaltung kann also dem Grundkörper zugeordnet sein, wohingegen die Funktionalität der Auswerteschaltung zur Erzeugung des Messwerts der jeweiligen Messzelle zugeordnet sein kann. Für die Vielzahl der Messzellen kann eine gemeinsame Auswerteschaltung vorgesehen sein. Die Auswerteschaltung kann somit anteilig jeder der Vielzahl der Messzellen funktonal zugeordnet sein.

Durch die Wärmekapazität des Grundkörpers und die Verbindungen des Grundkörpers zu den Messzellen ist nicht nur ein Wärmestrom von den Messzellen zum Grundkörper möglich, sondern auch in umgekehrter Richtung, nämlich ein Wärmestrom von dem Grundkörper zurück zu den Messzellen. Es kann vorkommen, dass die Wärme im Grundkörper nicht gleichmäßig über den Grundkörper verteilt ist. Dies kann beispielsweise entstehen, wenn das Detektorarray zuvor nicht homogen bestrahlt wurde. Ein Messobjekt und der Grundkörper verursachen jeweils einen Wärmestrom, der auf die jeweilige Messzelle einwirkt. Die inhomogene Verteilung der Wärme im Grundkörper beeinflusst den Wärmestrom vom Grundkörper auf die jeweilige Messzelle, was einen Messfehler in Bezug auf den Messwert und die von dem Messwert zu repräsentierende Temperatur im Erfassungsbereich der jeweiligen Messzelle verursacht. Der Messfehler der Messwerte der Messzellen ist durch die inhomogene Verteilung der Wärme über den Grundkörper geprägt. Folglich kommt es zu einer inhomogenen Verteilung der Messfehler über die Messzellen des Detektorarrarys. Jeder Messzelle kann ein Erfassungsbereich zugeordnet sein, der sich von der Außenfläche der jeweiligen Messzelle orthogonal nach außen erstreckt. Dieser Erfassungsbereich kann einen zylindrischen Raum mit einer Grundfläche bilden, der der Außenfläche der Messzelle entspricht. Hat die Messzelle beispielsweise eine rechteckige Grundfläche, so kann sich der Erfassungsbereich, der der jeweiligen Messzelle zugeordnet ist, durch einen zylindrischen Raum bilden, der ebenfalls eine rechteckige Grundfläche aufweist. Die Erfassungsbereiche der Messzellen können sich überlappen. Dies kann insbesondere dann der Fall sein, wenn die den Messzellen zugeordneten Erfassungsbereiche kegelförmig sind.

Wird die Infrarotstrahlung aus einem Erfassungsbereich einer Messzelle erfasst, was die Temperatur im Erfassungsbereich repräsentiert, so kann der von der Messzelle erzeugte Messwert die Temperatur im zugehörigen Erfassungsbereich sowie einen Messfehler umfassen. Der Messfehler kann dann entstehen, wenn Wärme vom Grundkörper während der Messung der Temperatur im Erfassungsbereich zu der jeweiligen Messzelle strömt, oder umgekehrt. Bevor erläutert wird, wie ein um den Messwertfehler korrigierter Temperaturwert ermittelbar ist, sollen zunächst noch weitere vorteilhafte Eigenschaften des Systems erläutert werden.

Bevorzugt ist es vorgesehen, dass die Messwerte der Messzelle an zeitlich aufeinander folgenden Messzeitpunkten erfasst werden. So können die Messwerte der Messzellen beispielsweise mit einer Abtastfrequenz von beispielsweise 50 Hz erfasst werden. Das Detektorarray kann dafür ausgebildet sein, an zeitlich aufeinander folgenden Messzeitpunkten jeweils einen Messdatensatz zu erzeugen, der die Messwerte der Messzellen zum jeweiligen Messzeitpunkt repräsentiert. Die Messdatensätze können also ebenfalls in einer Frequenz mit insbesondere 50 Hz erzeugt werden.

Zwischen dem Detektorarray und der Prozessoreinheit kann deshalb eine Signalverbindung bestehen, um das Messsignal von dem Detektorarray an die Prozessoreinheit zu übertragen. Die Signalverbindung kann durch eine elektrische Leitung, vorzugsweise mit mehreren Adern, oder durch eine Funk-Verbindung ausgebildet sein. Das Messsignal repräsentiert die von den Messzellen erzeugten Messwerte. Die Messwerte können also einzeln über das Messsignal von dem Detektorarray an die Prozessoreinheit übertragen werden. Es ist jedoch auch möglich, dass die Messsignale in Form der Messdatensätze über das Messsignal von dem Detektorarray an die Prozessoreinheit übertragen wird.

Über das Messsignal liegen der Prozessoreinheit also die Messwerte, die die Temperatur im Erfassungsbereich repräsentieren, vor. Die Erfassung der Temperatur erfolgt dabei durch die Erfassung der Infrarotstrahlung aus dem Erfassungsbereich, die auf die Messzelle trifft. Diese Infrarotstrahlung kann einen Wärmestrom von der Messzelle zu dem Grundkörper verursachen. Über den zeitlichen Verlauf der Messwerte, der Wärmeleitfähigkeit der Verbindungen zwischen den Messzellen und dem Grundkörper sowie über die Wärmekapazität des Grundkörpers kann deshalb die vom Grundkörper gespeicherte Wärme und die zugehörige Verteilung der Wärme über den Grundkörper ermittelt werden. Es ist deshalb vorgesehen, dass die Prozessoreinheit konfiguriert ist, die vom Grundkörper gespeicherte Körperwärme, und vorzugsweise die Verteilung der Wärme über den Grundkörper, basierend auf der Wärmekapazität, der Wärmeleitfähigkeit und entweder dem Messsignal direkt oder einer aus dem Messsignal direkt oder indirekt abgeleiteten Größe zu ermitteln. Die Kenntnis über die Körperwärme und die Verteilung der Körperwärme ist hilfreich, um zu ermitteln, welchen Messfehler die Wärme des Grundkörpers über die Verbindung zu der jeweiligen Messzelle verursacht.

Da jede Messzelle als Zeitverzögerungsglied ausgebildet ist, tritt eine Verzögerung zwischen dem Auftreten einer Intensitätsänderung der Infrarotstrahlung, die auf die Messzelle einwirkt, und dem von der jeweiligen Messzelle erzeugten Messwert auf. Daraus resultiert auch eine Zeitverzögerung zwischen der tatsächlichen Temperatur im Erfassungsbereich und dem Messwert der jeweiligen Messzelle. Es ist deshalb wünschenswert, einen Prädiktionswert zu ermitteln, der die um die Zeitverzögerung kompensierte Voraussagetemperatur im Erfassungsbereich der jeweiligen Messzelle repräsentiert. Um dies zu erreichen, wird auf die Erkenntnisse zurückgegriffen, dass der exponentielle Verlauf des Messwerts bei einer sprunghaften Änderung der Intensität der Infrarotstrahlung, die auf die jeweilige Messzelle einwirkt, vorhersagbar ist. Denn der grundsätzliche Verlauf einer Sprungantwort eines Verzögerungsglieds, insbesondere eines Verzögerungsglieds erster Ordnung, ist bekannt.

Wird beispielhaft angenommen, dass eine bolometrische Messzelle durch eine Infrarotstrahlung beaufschlagt wird, die einen sprunghaften Verlauf aufweist, so können die zeitlich aufeinander folgenden Messwerte der bolometrische Messzelle vorausgesagt werden, die den charakteristischen Verlauf einer Sprungantwort eines Verzögerungsglieds, insbesondere eines Verzögerungsglieds erster Ordnung, aufzeigen. Aufgrund dieser Kenntnis ist es möglich, dass die ersten beiden Messwerte in Reaktion auf die Sprungantwort verwendet werden, um basierend hierauf eine Voraussage über den Messwert im Gleichgewichtszustand zu machen. Praxisnah wird oftmals davon ausgegangen, dass nach dem Vierfachen oder Fünffachen der Zeitkonstante des Verzögerungsglieds bzw. der bolometrischen Messzelle ein Messwert vorherrscht, der bis auf kleine Abweichungen dem statischen und realen Messwertzustand als Reaktion auf den sprunghaften Anstieg der Infrarotstrahlung entspricht. Da der grundsätzliche Verlauf der Sprungantwort bekannt ist, kann bereits aus der Erkenntnis von zwei Messwerten eine Voraussage darüber getroffen werden, wie der Messwert nach dem Vierfachen oder Fünffachen der Zeitkonstante sein wird.

Die Prozessoreinheit ist deshalb dazu konfiguriert, für jeden aktuellen Messwert einer jeden Messzelle einen um die Zeitverzögerung der jeweiligen Messzelle kompensierten Prädiktionswert, basierend auf dem aktuellen Messwert der jeweiligen Messzelle und mindestens einem zeitlich vorangegangenen Messwert der gleichen Messzelle, zu ermitteln, so dass der jeweilige Prädiktionswert eine aktuelle, um die Zeitverzögerung kompensierte Voraussagetemperatur im Erfassungsbereich der jeweiligen Messzelle repräsentiert. Basierend auf der vorangegangenen Überlegung, dass der grundsätzliche Verlauf einer Sprungantwort bei einem Zeitverzögerungsglied voraussagbar ist, kann vereinfacht betrachtet mit einer vorbestimmten Kenngröße und einer Differenz zwischen dem jeweils aktuellen Messwert und dem zeitlich vorangegangenen Messwert für die gleiche Messzelle eine Voraussage darüber getroffen werden, welcher Messwert von der jeweiligen Messzelle nach dem Vierfachen oder Fünffachen der Zeitkonstante, bei dem vorzugsweise ein eingeschwungener Zustand, ein quasi statischer Zustand oder ein Gleichgewichtszustand vorherrscht, erzeugt wird. Dies würde unter normalen Umständen das das Vierfache oder Fünffache der Zeitkonstante benötigen. Diese Zeit ist in der Praxis oftmals zu lang, um darauf warten zu können. Deshalb ist es bevorzugt vorgesehen, dass die Prozessoreinheit konfiguriert ist, für jeden aktuellen Messwert einer jeden Messzelle einen um die Verzögerungszeit der jeweiligen Messzelle kompensierten Prädiktionswert, basierend auf dem aktuellen Messwert der jeweiligen Messzelle und dem unmittelbar zuvor erfassten Messwert der gleichen Messzelle, zu ermitteln. Mit anderen Worten kann mit Hilfe von zwei aufeinanderfolgenden Messwerten eine um die Zeitverzögerung der jeweiligen Messzelle kompensierter Prädiktionswert ermittelt werden. Die Kenngröße ist vorzugsweise ein Faktor zwischen 0,5 und 0,8, insbesondere ein Faktor von 0,632.

Darüber hinaus ist es oftmals so, dass sich die Infrarotstrahlung, die auf eine Messzelle wirkt, ändert, insbesondere in einem Zeitraum, der dem Fünffachen der Zeitkonstante der jeweiligen Messzelle entspricht. Es besteht deshalb mit bekannten Ansätzen kaum die Möglichkeit, einen Messwert zu erzeugen, der zeitnah und quantitativ annähernd genau die tatsächliche richtige Intensität der Infrarotstrahlung bzw. der Temperatur im Erfassungsbereich aufzeigt, der von einer bolometrischen Messzelle erfasst wird. Es wird deshalb die Erkenntnis von Zeitverzögerungsgliedern sowie von vorzugsweise zwei aufeinanderfolgenden Messwerten genutzt, um einen Prädiktionswert bzw. eine Voraussagetemperatur für den Erfassungsbereich zu ermitteln, der bzw. die die tatsächlich auf die Messzelle einwirkende Infrarotstrahlung oder die tatsächlich im Erfassungsbereich vorliegende Temperatur quantitativ annähernd genau repräsentiert.

Wenn im Folgenden auf einen zeitlich vorangegangenen Messwert Bezug genommen wird, so soll sich dies vorzugsweise auf den Messwert beziehen, der unmittelbar zeitlich vor dem jeweils aktuell empfangenen Messwert empfangen wurde.

Jeder Messzelle kann eine Kenngröße zugeordnet sein. Die Kenngröße kann ein fester Wert sein oder nach Art einer Formel bestimmt sein. Insbesondere kann die Kenngröße auf der Zeitkonstante der Messzelle basieren oder dadurch bestimmt sein, so dass die Prozessoreinheit, basierend auf einem Differenzwert zwischen dem aktuellen Messwert und dem zeitlich vorangegangenen Messwert sowie der Kenngröße, einen Wert für den Prädiktionswert ermitteln kann. Mit anderen Worten kann die Prozessoreinheit dazu konfiguriert sein, für jeden aktuellen Messwert einer jeden Messzelle einen um die Zeitverzögerung der jeweiligen Messzelle kompensierten Prädiktionswert, basierend auf der Kenngröße der Messzelle und einem Differenzwert, zu bestimmen, wobei der Differenzwert die Differenz zwischen dem aktuellen Messwert der jeweiligen Messzelle und dem zeitlich vorangegangenen Messwert der gleichen Messzelle ist.

Durch die erlangte Erkenntnis über den Prädiktionswert bzw. die Voraussagetemperatur sowie aufgrund der Erkenntnis über den aktuellen Messwert, der eine Temperatur im Erfassungsbereich repräsentiert, kann eine Temperaturdifferenz zwischen den beiden zuvor genannten Werten ermittelt werden. Diese Temperaturdifferenz sowie die weitere Kenntnis über den aktuellen Wert der Körperwärme des Grundkörpers erlaubt eine Aussage darüber, wie groß der Wärmestrom zwischen der jeweiligen Messzelle und dem Grundkörper ist. Dieser Wärmestrom kann von der Messzelle zum Grundkörper oder umgekehrt ausgebildet sein. Durch den Wärmestrom wird jedoch der zuvor erläuterte Messfehler verursacht, der dem Messwert der jeweiligen Messzelle anhaftet. Die zuvor erläuterten Erkenntnisse erlauben deshalb die Ermittlung eines Temperaturwerts für den Erfassungsbereich einer jeweiligen Messzelle, wobei der Temperaturwert, der jeweils um den Messwertfehler korrigierte Prädiktionswert ist. So kann der Messwertfehler beispielsweise von dem Prädiktionswert abgezogen werden, um den Temperaturwert zu ermitteln. Die Prozessoreinheit ist deshalb dazu konfiguriert, für jeden aktuellen Prädiktionswert einen um den Messwertfehler korrigierten Temperaturwert im Erfassungsbereich der jeweiligen Messzelle, basierend auf dem jeweiligen Prädiktionswert, auf der Wärmeleitfähigkeit und entweder direkt oder indirekt auf dem aktuellen Wert der Körperwärme, zu ermitteln. Der Temperaturwert gibt dabei eine Voraussage für die Temperatur im Erfassungsbereich wieder, wobei die Temperatur zugleich um den Messwertfehler korrigiert ist. Der Temperaturwert für den Erfassungsbereich einer Messzelle ist deshalb besonders genau und deutlich schneller verfügbar, als es mit bisher bekannten Methoden zur Erfassung einer Temperatur in einem Erfassungsbereich möglich ist.

Außerdem ist die Prozessoreinheit konfiguriert, ein Wärmebild, basierend auf den aktuellen Temperaturwerten für die Erfassungsbereiche der Messzellen, zu ermitteln. Die zuvor genannten Erläuterungen zu Ermittlung des Prädiktionswerts und des Temperaturwerts werden für jede Messzelle bzw. für jeden Messwert einer jeweiligen Messzelle ausgeführt. Da das Detektorarray eine Vielzahl von Messzellen aufweist, entstehen bei jeder periodischen Erfassung der Messwerte der Messzellen auch eine entsprechende Vielzahl von Prädiktionswerten sowie eine entsprechende Vielzahl von Temperaturwerten. Diese Vielzahl von Temperaturwerten können entsprechend der Anordnung der Messzellen im Detektorarray verwendet werden, um dadurch ein Wärmebild, das vorzugsweise die bildliche Darstellung der Temperaturwerte optisch wiedergibt, sein. Mit anderen Worten kann das Wärmebild durch eine Vielzahl von Pixeln gebildet sein, die in ihrer Anordnung der Anordnung der Messzellen des Detektorarrays entsprechen. Die Farbe und/oder Lichtintensität der Pixel kann durch die korrespondierenden Temperaturwerte bestimmt sein oder zumindest davon abhängig sein.

Darüber hinaus weist das System eine Signalschnittstelle auf. Die Signalschnittstelle kann separat zu der Prozessoreinheit ausgebildet sein. Es ist jedoch auch möglich, dass die Signalschnittstelle einen Teil der Prozessoreinheit bildet. Mit anderen Worten können die Signalschnittstelle und die Prozessoreinheit integral ausgebildet sein. Die Signalschnittstelle ist ausgebildet, ein Bildsignal bereitzustellen, das das Wärmebild repräsentiert. Die Signalschnittstelle kann dazu ausgebildet sein, das Bildsignal per Funk zu übertragen oder kabelgebunden zu übertragen. So kann die Signalschnittstelle beispielsweise eine Funkschnittstelle oder eine kabelgebundene Signalschnittstelle sein.

Eine vorteilhafte Ausgestaltung des Systems zeichnet sich dadurch aus, dass die Prozessoreinheit konfiguriert ist, einen eine Wärmeverteilung im Grundkörper repräsentierender Parametervektor basierend auf der Wärmekapazität, auf der thermischen Leitfähigkeit und entweder direkt oder indirekt auf dem Messsignal zu ermitteln.

Wie bereits erläutert wurde, liegen der Prozessoreinheit über das Messsignal die Messwerte vor, die die Temperatur im Erfassungsbereich repräsentieren. Die Erfassung der Temperatur erfolgt dabei durch die Erfassung der Infrarotstrahlung aus dem Erfassungsbereich, die auf die Messzellen trifft. Diese Infrarotstrahlung kann von jeder der Messzellen einen Wärmestrom zu dem Grundkörper verursachen. Die Messzellen sind ein Teil des Detektorarrays des Systems, wobei die Messzellen vorzugsweise gleichmäßig verteilt angeordnet sind. So können die Messzellen beispielsweise in einem vorbestimmten Muster aus Zeilen und Spalten verteilt angeordnet sein. Über den zeitlichen Verlauf der Messwerte, der Wärmeleitfähigkeit der Verbindungen zwischen den Messzellen und dem Grundkörper sowie über die Wärmekapazität des Grundkörpers kann deshalb die Verteilung der Wärme über den Grundkörper ermittelt werden. Dabei kann auch berücksichtigt werden, dass die Messzellen über dem Grundkörper angeordnet sind. Jeder der Vielzahl von Messzellen kann ein Teil des Grundkörpers entsprechend einer Projektionsfläche der jeweiligen Messzelle auf den Grundköpers zugeordnet werden. Außerdem kann die Prozessoreinheit konfiguriert sein, eine von jedem Teil des Grundkörper gespeicherte Teilkörperwärme basierend auf dem Messwert der jeweils zugehörigen Messzelle, auf der Wärmekapazität des Grundkörpers und auf der thermischen Leitfähigkeit der Verbindung von der jeweiligen Messzelle zu dem jeweiligen Teil des Grundkörpers zu ermitteln. Die Prozessoreinheit kann somit für jede Messzelle eine der jeweiligen Messzelle zugeordnete Teilkörperwärme des Grundkörpers ermitteln. Durch die bekannte Anordnung der Messzellen im Detektorarray kann auf eine entsprechende Anordnung der Teile des Grundkörpers geschlossen werden. Diese Anordnung kann in der Prozessoreinheit oder einem der Prozessoreinheit zugewiesenen Speicher des Systems gespeichert sein. Die Prozessoreinheit kann dazu konfiguriert werden, basierend auf der Anordnung der Teile des Grundkörpers und der zugehörigen Teilkörperwärmen einen eine Wärmeverteilung im Grundkörper repräsentierenden Parametervektor zu ermitteln. Der Parametervektor kann beispielsweise die Werte der Teilkörperwärmen umfassen, diese repräsentieren oder davon gebildet sein. Der Parametervektor kann als eine Parametermatrix ausgestaltet sein, die für jeden Teil des Grundkörpers einen zugehörigen Parameterwert aufweist.

Eine vorteilhafte Ausgestaltung des Systems zeichnet sich dadurch aus, dass die Prozessoreinheit konfiguriert ist, für jeden aktuellen Prädiktionswert den um den Messwertfehler korrigierten Temperaturwert im Erfassungsbereich der jeweiligen Messzelle basierend auf dem jeweiligen Prädiktionswert, auf der thermischen Leitfähigkeit, entweder direkt oder indirekt auf dem aktuellen Wert der Körperwärme und zusätzlich basierend auf dem Parametervektor zu ermitteln. Der relevante Wert der Körperwärme kann durch einen der jeweiligen Messzelle zugeordneten Parameterwert des Parametervektors bestimmt sein. Durch die erlangte Erkenntnis über den Prädiktionswert bzw. die Voraussagetemperatur sowie aufgrund der Erkenntnis über den aktuellen Messwert, der eine Temperatur im Erfassungsbereich repräsentiert, kann eine Temperaturdifferenz zwischen den beiden zuvor genannten Werten mittels der Prozessoreinheit ermittelt werden. Diese Temperaturdifferenz sowie die weitere Kenntnis über den aktuellen Wert der Körperwärme des relevanten Teils des Grundkörpers, nämlich der Teilkörperwärme des Teils des Grundkörpers, auf den die jeweilige Messzelle projiziert, erlaubt eine Aussage darüber, wie groß der Wärmestrom zwischen der jeweiligen Messzelle und dem Grundkörper ist. Dieser Wärmestrom kann von der Messzelle zum Grundkörper oder umgekehrt ausgebildet sein. Durch den Wärmestrom wird jedoch der zuvor erläuterte Messfehler verursacht, der dem Messwert der jeweiligen Messzelle anhaftet. Die zuvor erläuterten Erkenntnisse erlauben deshalb die Ermittlung eines Temperaturwerts für den Erfassungsbereich einer jeweiligen Messzelle mittels der Prozessoreinheit, wobei der Temperaturwert, der jeweils um den Messwertfehler korrigierte Prädiktionswert ist. So kann der Messwertfehler beispielsweise von dem Prädiktionswert abgezogen werden, um den Temperaturwert zu ermitteln. Die Prozessoreinheit ist deshalb dazu konfiguriert, für jeden aktuellen Prädiktionswert einen um den Messwertfehler korrigierten Temperaturwert im Erfassungsbereich der jeweiligen Messzelle, basierend auf dem jeweiligen Prädiktionswert, auf der Wärmeleitfähigkeit und entweder direkt oder indirekt auf dem aktuellen Wert der Teilkörperwärme, zu ermitteln. Der Temperaturwert gibt dabei eine Voraussage für die Temperatur im Erfassungsbereich wieder, wobei die Temperatur zugleich um den Messwertfehler korrigiert ist.

Eine vorteilhafte Ausgestaltung des Systems zeichnet sich dadurch aus, dass jede Messzelle eine Sensorschicht zur Absorption von Infrarotstrahlung aufweist, der Grundkörper ein Substrat mit einer Ausleseschaltung aufweist und jede Messzelle mit zugehörigen Elektroden mit dem Grundkörper verbunden ist, so dass die Elektroden einer Messzelle die Verbindung der jeweiligen Messzelle zum Grundkörper bilden. Die Messzelle kann außerdem über die zugehörigen Elektroden mit der Ausleseschaltung verbunden sein. Über die Ausleseschaltung und die Elektroden kann somit ein elektrischer Widerstand einer jeweiligen Messzelle erfasst werden, der repräsentativ für den Messwert der jeweiligen Messzelle ist. Mit anderen Worten kann der Messwert basierend auf dem durch die Messschaltung erfassten elektronischen Widerstand bestimmt werden. Hierzu kann die Ausleseschaltung entsprechend ausgebildet sein. Die Ausleseschaltung kann auf das Substrat aufgebracht sein und/oder integral in das Substrat integriert sein. Der Grundkörper kann ein ununterbrochener Grundkörper sein, und die Messzellen können zeilenartig oder matrixartig angeordnet sein. Die Messzellen können mechanisch und/oder stoffschlüssig miteinander verbunden sein.

Eine weitere vorteilhafte Ausgestaltung des Systems zeichnet sich dadurch aus, dass die Prozessoreinheit konfiguriert ist, die vom Grundkörper gespeicherte Körperwärme, basierend auf der Wärmekapazität und auf der Wärmeleitfähigkeit und den Prädiktionswerten zu ermitteln. Durch die Absorption von Infrarotstrahlung kann ein Wärmestrom von den Messzellen über die zugehörigen Verbindungen, insbesondere die zugehörigen Elektroden, zu dem Grundkörper geleitet werden. Der Grundkörper weist die Wärmekapazität auf. Die Wärmeleitfähigkeit bezieht sich auf die thermische Leitfähigkeit der Verbindungen zwischen den Messzellen und dem Grundkörper. Insbesondere ist hier bevorzugt vorgesehen, dass die Messzellen jeweils gleich ausgestaltet sind und somit auch gleiche Verbindungen zwischen den Messzellen und dem Grundkörper bestehen. Die Wärmeleitfähigkeit bezieht sich somit auf eine Verbindung oder die mehreren Verbindungen. Da die Verbindungen jedoch gleich ausgestaltet sind, kann die Wärmeleitfähigkeit für jede der Verbindungen gleich sein. Deshalb kann auch von einer Wärmeleitfähigkeit gesprochen werden, da sich diese jeweils auf eine der Verbindungen bzw. auf jede der gleichen Verbindungen beziehen kann. Die Prädiktionswerte repräsentieren Voraussagetemperaturen für die Erfassungsbereiche der Messzellen. Mit diesen Voraussagetemperaturen, der thermischen Leitfähigkeit der Verbindungen zwischen den Messzellen und dem Grundkörper sowie der Wärmekapazität des Grundkörpers kann die Körperwärme des Grundkörpers ermittelt werden. Hierzu kann die Prozessoreinheit entsprechend konfiguriert sein.

Eine weitere vorteilhafte Ausgestaltung des Systems zeichnet sich dadurch aus, dass die Prozessoreinheit konfiguriert ist, die Körperwärme, basierend auf der zuletzt ermittelten Körperwärme, der Wärmekapazität, der Wärmeleitfähigkeit sowie entweder dem mindestens einen aktuellen Messwert oder dem mindestens einen aktuellen Prädiktionswert, zu ermitteln. Das Detektorarray ist ausgebildet, Infrarotstrahlung periodisch mittels der zugehörigen Messzellen zu erfassen. Es ist deshalb bevorzugt vorgesehen, dass für die Vielzahl von bolometrischen Messzellen periodisch eine Gruppe von Messwerten erzeugt wird, die die Messwerte der Vielzahl der Messzellen repräsentiert. In entsprechender Weise kann somit auch eine periodische Ermittlung der Körperwärme, der Prädiktionswerte und der Temperaturwerte erfolgen. Grundsätzlich kann die Körperwärme beispielsweise nach jeder Ermittlung eines Prädiktionswerts oder nach jeder Übertragung eines Messwerts an die Prozessoreinheit berechnet werden. Es ist jedoch auch möglich, dass die Körperwärme periodisch nach jeder Übertragung einer Gruppe von Messwerten oder nach der Berechnung einer Gruppe von Prädiktionswerten ermittelt wird. Dabei ist es bevorzugt vorgesehen, dass die jeweils zuletzt ermittelte Körperwärme des Grundkörpers berücksichtigt wird. Außerdem wird bei der Ermittlung der (aktuellen) Körperwärme die Wärmekapazität des Grundkörpers, die Wärmeleitfähigkeit der Verbindung zwischen der jeweiligen Messzelle und dem Grundkörper sowie der mindestens eine aktuelle Messwert oder der mindestens eine aktuelle Prädiktionswert berücksichtigt. Dabei kann es sich beispielsweise um einen aktuellen Messwert, einen aktuellen Prädiktionswert, eine aktuelle Gruppe von Messwerten oder eine aktuelle Gruppe von Prädiktionswerten handeln. Vorzugsweise kann, basierend auf der zuletzt ermittelten Körperwärme und der Wärmekapazität des Grundkörpers, auf eine Temperatur des Grundkörpers geschlossen werden. Diese kann im Vergleich zu der Temperatur gemäß dem aktuellen Messwert oder dem aktuellen Prädiktionswert verwendet werden, um durch die entsprechende Differenz und die Wärmeleitfähigkeit auf einen Wärmestrom zu schließen, der von der jeweiligen Messzelle zum Grundkörper, oder umgekehrt, entstehen kann. Basierend auf dieser Erkenntnis kann wiederum auf die aktuelle Körperwärme des Grundkörpers geschlossen werden. Die Prozessoreinheit kann konfiguriert sein, die zuvor erläuterten Schritte einzeln oder nacheinander auszuführen. Bei einer erstmaligen Ermittlung der Körperwärme kann von einer vorbestimmten Körperwärme als zuletzt ermittelte Körperwärme ausgegangen werden. Die vorbestimmte Körperwärme kann als ein entsprechender Wert von der Prozessoreinheit gespeichert sein.

Eine weitere vorteilhafte Ausgestaltung des Systems zeichnet sich dadurch aus, dass die Prozessoreinheit konfiguriert ist, eine Körpertemperatur des Grundkörpers, basierend auf der Wärmekapazität des Grundkörpers und dem aktuellen Wert der Körperwärme, zu ermitteln, und wobei die Prozessoreinheit konfiguriert ist, für jeden aktuellen Prädiktionswert den den Messwertfehler korrigierten Temperaturwert im Erfassungsbereich der jeweiligen Messzelle basierend auf dem Prädiktionswert der jeweiligen Messzelle, der Wärmeleitfähigkeit der Verbindung zu der jeweiligen Messzelle und dem aktuellen Wert der Körpertemperatur des Grundkörpers zu ermitteln. Die Prozessoreinheit kann somit beispielsweise die Körpertemperatur des Grundkörpers aus dem Produkt der Wärmekapazität des Grundkörpers und dem aktuellen Wert der Körperwärme ermitteln. Der dadurch mittelbare aktuelle Wert der Körpertemperatur kann von der Prozessoreinheit verwendet werden, um einen Wärmestrom zu ermitteln, der über die Verbindung der jeweiligen Messzelle zu dem Grundkörper, oder in umgekehrter Richtung, erfolgt. Der Messwertfehler ist vorzugsweise proportional zum Wärmestrom. So kann der Messfehler beispielsweise aus dem Wert des Wärmestroms und einem vorbestimmten Anteilsfaktor bestimmt sein. So kann die Prozessoreinheit dazu konfiguriert sein, den Messfehler aus dem Produkt des Werts des aktuellen Wärmestroms und einem vorbestimmten Anteilsfaktor zu bestimmen. Darüber hinaus kann die Prozessoreinheit dazu konfiguriert sein, den aktuellen Temperaturwert dadurch zu bestimmen, dass von der Voraussagetemperatur, die von dem jeweiligen Prädiktionswert repräsentiert ist, eine Temperaturgröße abgezogen wird, die durch den Messwertfehler repräsentiert ist. Mit anderen Worten kann die Prozessoreinheit dazu konfiguriert sein, den Temperaturwert für den Erfassungsbereich einer Messzelle durch Subtraktion einer Temperaturgröße gemäß dem Messwertfehler von der Voraussagetemperatur für die jeweilige Messzelle zu ermitteln. Auf diese Weise kann der Temperaturwert für den Erfassungsbereich jeder der Messzellen ermittelt werden. Die Prozessoreinheit kann hierzu entsprechend konfiguriert sein.

Eine weitere vorteilhafte Ausgestaltung des Systems zeichnet sich dadurch aus, dass das Detektorarray ausgebildet ist, dass jede Messzelle die Infrarotstrahlung im zugehörigen Erfassungsbereich periodisch mit einer Messdauer erfasst, die kleiner als die Zeitkonstante der jeweiligen Messzelle ist, so dass jeder Messwert einen Zeitverzögerungsfehler aufweist. Obwohl die Messdauer kleiner als die jeweilige Zeitkonstante der zugehörigen Messzelle ist, erlaubt das System eine besonders schnelle und zugleich präzise Ermittlung des Temperaturwerts für den Erfassungsbereich der jeweiligen Messzelle. Darüber hinaus bietet eine Messdauer, die kleiner als die Zeitkonstante der jeweiligen Messzelle ist, die Möglichkeit, dass das Detektorarray die Infrarotstrahlung im Erfassungsbereich der Messzellen mit einer besonders hohen Frequenz periodisch erfasst. Daraus folgt, dass das Wärmebild entsprechend oft aktualisiert werden kann und dass das Bildsignal aktuelle Wärmebilder mit einer geringen Zeitverzögerung zur Verfügung stellen kann.

Eine weitere vorteilhafte Ausgestaltung des Systems zeichnet sich dadurch aus, dass die Zeitkonstante einer jeden Messzelle durch einen thermischen Widerstand der jeweiligen Messzelle und eine thermische Kapazität der jeweiligen Messzelle bestimmt ist. Dies erlaubt eine besonders genaue Bestimmung der Zeitkonstante für jede der Messzellen. Vorzugsweise sind die Messzellen gleich ausgebildet, so dass die Zeitkonstante für jede der Messzellen gleich ist.

Eine weitere vorteilhafte Ausgestaltung des Systems zeichnet sich dadurch aus, dass die Messdauer kleiner als die Hälfte der Zeitkonstante der jeweiligen Messzelle ist. Auch dadurch kann eine hohe Frequenz der periodischen Erfassung der Infrarotstrahlung im Erfassungsbereich der Messzellen sowie aktuelle Wärmebilder mit einer geringen Verzögerungsrate und außerdem ein entsprechend aktuelles Bildsignal erzeugt werden.

Eine weitere vorteilhafte Ausgestaltung des Systems zeichnet sich dadurch aus, dass die Prozessoreinheit konfiguriert ist, den Prädiktionswert für die Voraussagetemperatur im Erfassungsbereich einer jeweiligen Messzelle durch Extrapolation der Messwerte der jeweiligen Messzelle oder durch Multiplikation eines Differenzwertes, der durch die Differenz zwischen dem aktuellen Messwert der jeweiligen Messzelle und einem vorangegangenen Messwert der gleichen Messzelle bestimmt ist, mit einem vorbestimmten Faktor zwischen 0,5 und 0,8, insbesondere mit einem Faktor von 0,632, zu ermitteln. Basierend auf der Differenz zwischen dem aktuellen Messwert der Messzelle und dem zeitlich unmittelbar vorangegangenen Messwert der Messzelle kann eine abgeschätzte Voraussage darüber getroffen werden, welchen Wert der Messwert der Messzelle bei einer Sprungantwort annimmt. So ist es beispielsweise bekannt, dass die Sprungantwort in der Zeit zwischen 0 und der Zeit, die der Zeitkonstante entspricht, einen etwa linearen Verlauf annimmt, so dass der Wert des Messwerts nach der Zeit, die der Zeitkonstante entspricht, einen Wert von 63,2 % des finalen, zu erwartenden statistischen Werts der Sprungantwort bereits erreicht hat. Wenn also aus diesem linearen Verlauf bereits eine Aussage über den finalen zu erwartenden statistischen Wert voraussagbar ist, so ist dadurch eine Kenngröße bzw. ein Faktor, basierend auf der Zeitkonstante, erzeugbar, der bzw. die unter Verwendung der Differenz zwischen den beiden Messwerten eine Aussage erlaubt, welchen Wert der Messwert in einem statisch eingeschwungenen Zustand annimmt, was vorzugsweise etwa nach dem Fünffachen der Zeitkonstante der Fall ist. Ist der Aufsetzpunkt der Sprungantwort nicht neu, sondern durch den vorherigen Messwert bestimmt, so kann dieser ebenfalls berücksichtigt werden, um quantitativ den richtigen zu erwartenden Messwert im eingeschwungenen Zustand zu bestimmen. Ein vorteilhafte Ausgestaltung des Systems zeichnet sich beispielsweise dadurch aus, dass die Prozessoreinheit konfiguriert ist, den Prädiktionswert für die Voraussagetemperatur im Erfassungsbereich der jeweiligen Messzelle durch Multiplikation des Differenzwerts, der durch die Differenz zwischen dem aktuellen Messwert der jeweiligen Messzelle und einem vorangegangenen Messwert der gleichen Messzelle bestimmt ist, mit einem Kennwert zwischen 1,6 und 1,2, insbesondere mit einem Kennwert von 1,58, zu ermitteln. Der Kennwert von 1,58 entspricht dabei dem Kehrwert von 63,2 %, also dem anteiligen Wert der Sprungantwort nach Ablauf der Zeit, die der einfachen Zeitkonstante entspricht.

Eine weitere vorteilhafte Ausgestaltung des Systems zeichnet sich dadurch aus, dass das Detektorarray ausgebildet ist, so dass die Messzellen die Infrarotstrahlung in den zugehörigen Erfassungsbereichen mit einer Frequenz von mindestens 20 Hz periodisch erfassen. Bei einer Frequenz von 20 Hz können somit beispielsweise 20 Wärmebilder pro Sekunde ermittelt werden. Vorzugsweise ist die Frequenz größer als 20 Hz. So kann die Frequenz beispielsweise mindestens 30 Hz, mindestens 40 Hz, mindestens 50 Hz oder mindestens 100 Hz sein. Gerade bei höheren Frequenzen ist das erfindungsgemäße System besonders vorteilhaft. Denn der lineare Anstieg der Sprungantwort eines Verzögerungsglieds, insbesondere eines Verzögerungsglieds erster Ordnung, ist gerade dann vorteilhaft nutzbar, wenn ein sehr kurzes Zeitintervall der Sprungantwort zu berücksichtigen ist, das kleiner als die Zeitkonstante des jeweiligen Verzögerungsglieds ist. In diesem Fall können die Temperaturwerte im Erfassungsbereich auch bei einer schnellen Änderung der Infrarotstrahlung im Erfassungsbereich präzise schnell und gleichzeitig mit einer geringen Fehlerrate ermittelt werden. Bei gewöhnlichen bolometrischen Messsystemen ist dies nicht mehr möglich.

Eine weitere vorteilhafte Ausgestaltung des Systems zeichnet sich dadurch aus, dass die Prozessoreinheit konfiguriert ist, die über das Messsignal empfangenen Messwerte mittels eines Tiefpasses zu filtern, so dass die daraus resultierenden Messwerte für die Ermittlung der Körperwärme und/oder der Prädiktionswerte dienen. Der Tiefpass kann durch eine Konfiguration der Prozessoreinheit gebildet sein. Mit anderen Worten kann die Prozessoreinheit konfiguriert sein, um die Tiefpassfilterung der Messwerte auszuführen. Ein Rauschen in den Messwerten kann somit unterdrückt werden.

Gemäß einem zweiten Aspekt der Erfindung wird die eingangs genannte Aufgabe gelöst durch ein Verfahren mit den Merkmalen des Anspruchs 12. Vorgesehen ist also ein Verfahren zur Ermittlung eines Wärmebilds mittels eines Systems, das eine Prozessoreinheit, eine Signalschnittstelle und ein Detektorarray aufweist. Das Detektorarray weist dabei eine Vielzahl von bolometrischen Messzellen und einen Grundkörper mit einer vorbestimmten thermischen Wärmekapazität auf. Jede Messzelle ist über eine zugehörige Verbindung, die eine vorbestimmte, thermische Leitfähigkeit aufweist, direkt oder indirekt mit dem Grundkörper verbunden, so dass Wärme zwischen jeder Messzelle und dem Grundkörper übertragbar ist. Jede Messzelle ist zur Erfassung von Infrarotstrahlung in einem der jeweiligen Messzelle zugeordneten Erfassungsbereich und als Zeitverzögerungsglied mit einer Zeitkonstante zur Erzeugung eines die erfasste Infrarotstrahlung repräsentierenden Messwerts ausgebildet, der eine Temperatur im Erfassungsbereich der jeweiligen Messzelle repräsentiert und einen Messfehler umfasst, der durch einen Wärmestrom über die Verbindung der jeweiligen Messzelle zum Grundkörper verursacht ist. Das Verfahren weist die folgenden Schritte a) bis h) auf:
a) Periodisches Erfassen von Infrarotstrahlung mittels der Messzellen des Detektorarrays;
b) Erzeugen eines Messsignals, das die von den Messzellen erzeugten Messwerte repräsentiert, mittels des Detektorarrays;
c) Übertragen des Messsignal von dem Detektorarray an die Prozessoreinheit;
d) Ermitteln einer vom Grundkörper gespeicherte Körperwärme mittels der Prozessoreinheit und basierend auf der Wärmekapazität, auf der thermischen Leitfähigkeit und entweder direkt oder indirekt auf dem Messsignal;
e) Ermitteln für jeden aktuellen Messwert einer jeden Messzelle eines um die Zeitverzögerung der jeweiligen Messzelle kompensierten Prädiktionswerts mittels der Prozessoreinheit und basierend auf dem aktuellen Messwert der jeweiligen Messzelle und mindestens einem zeitlich vorangegangen Messwert der gleichen Messzelle, so dass der Prädiktionswert eine aktuelle, um die Zeitverzögerung kompensierte Voraussagetemperatur im Erfassungsbereich der jeweiligen Messzelle repräsentiert;
f) Ermitteln für jeden aktuellen Prädiktionswert eines um den Messwertfehler korrigierten Temperaturwerts im Erfassungsbereich der jeweiligen Messzelle mittels der Prozessoreinheit und basierend auf dem jeweiligen Prädiktionswert, auf der thermischen Leitfähigkeit und entweder direkt oder indirekt auf dem aktuellen Wert der Körperwärme, und
g) Ermitteln eines Wärmebilds mittels der Prozessoreinheit und basierend auf den aktuellen Temperaturwerten für die Erfassungsbereiche der Messzellen, und
h) Bereitstellen eines Bildsignals mittels der Signalschnittstelle, wobei das Bildsignal das Wärmebild repräsentiert.

Für das Verfahren gemäß dem zweiten Aspekt der Erfindung wird auf die vorteilhaften Erläuterungen, bevorzugte Merkmale, Effekte und/oder Vorteile, wie sie im Zusammenhang mit dem System gemäß dem ersten Aspekt der Erfindung erläutert worden sind, zumindest in analoger Weise Bezug genommen. Das Verfahren bietet somit beispielsweise den Vorteil, dass Temperaturwerte für die Erfassungsbereiche der Messzellen ermittelt werden können, die die tatsächliche Temperatur in den Erfassungsbereichen besonders präzise repräsentieren. Außerdem können die Temperaturwerte besonders schnell und ohne Zeitverzögerung ermittelt werden. Schließlich erlaubt das Verfahren die Ermittlung von Wärmebildern, basierend auf den ermittelten Temperaturwerten, sowie die Bereitstellung eines Bildsignals, das die Wärmebilder repräsentiert. Die Wärmebilder und das Bildsignal können somit ebenfalls eine besonders präzise Angabe der Temperaturen im Erfassungsbereich mit einer besonders geringen Zeitverzögerung sein.

Zu den im Folgenden wiedergegebenen vorteilhaften Ausgestaltungen des Verfahrens wird auf die vorteilhaften Erläuterungen, bevorzugte Merkmale, Effekte und/oder Vorteile in analoger Weise Bezug genommen, wie sie für das System gemäß dem ersten Aspekt der Erfindung und/oder eine der zugehörigen vorteilhaften Ausgestaltungen des Systems erläutert worden sind.

Eine vorteilhafte Ausgestaltung des Verfahrens zeichnet sich dadurch aus, dass das Verfahren einen weiteren, vor Schritt e) oder f) auszuführenden Schritt d.1) aufweist: Ermitteln eines eine Wärmeverteilung im Grundkörper repräsentierenden Parametervektors mittels der Prozessoreinheit basierend auf der Wärmekapazität, auf der thermischen Leitfähigkeit und entweder direkt oder indirekt auf dem Messsignal.

Eine vorteilhafte Ausgestaltung des Verfahrens zeichnet sich dadurch aus, dass die vom Grundkörper gespeicherte Körperwärme in Schritt d) basierend auf der Wärmekapazität, auf der Wärmeleitfähigkeit und den Prädiktionswerten mittels der Prozessoreinheit ermittelt wird.

Eine weitere vorteilhafte Ausgestaltung des Verfahrens zeichnet sich dadurch aus, dass die aktuelle Körperwärme in Schritt d) basierend auf der zuletzt ermittelten Körperwärme, der Wärmekapazität, der thermischen Leitfähigkeit sowie entweder dem mindestens einen aktuellen Messwert oder dem mindestens einen aktuellen Prädiktionswert mittels der Prozessoreinheit ermittelt wird.

Eine weitere vorteilhafte Ausgestaltung des Verfahrens zeichnet sich dadurch aus, dass das Verfahren einen weiteren, vor Schritt f) auszuführenden Schritt e.1) aufweist:
e.1) Ermitteln einer Körpertemperatur basierend auf der Wärmekapazität des Grundkörpers und dem aktuellen Wert der Körperwärme mittels der Prozessoreinheit;

wobei in Schritt f) mittels der Prozessoreinheit für jeden aktuellen Prädiktionswert der den Messwertfehler korrigierte Temperaturwert im Erfassungsbereich der jeweiligen Messzelle basierend auf dem Prädiktionswert der jeweiligen Messzelle, der thermischen Leitfähigkeit der Verbindung der jeweiligen Messzelle und dem aktuellen Wert der Körpertemperatur des Grundkörpers ermittelt wird.

Eine weitere vorteilhafte Ausgestaltung des Verfahrens zeichnet sich dadurch aus, dass in Schritt f) für jeden aktuellen Prädiktionswert P der um den Messwertfehler korrigierten Temperaturwert im Erfassungsbereich (16) der jeweiligen Messzelle (10) mittels der Prozessoreinheit (6) und basierend auf dem jeweiligen Prädiktionswert P, auf der thermischen Leitfähigkeit, entweder direkt oder indirekt auf dem aktuellen Wert der Körperwärme und zusätzlich basierend auf dem Parametervektor ermittelt wird.

Eine weitere vorteilhafte Ausgestaltung des Verfahrens zeichnet sich dadurch aus, dass in Schritt a) die Infrarotstrahlung mittels jeder Messzelle im zugehörigen Erfassungsbereich periodisch mit einer Messdauer erfasst wird, die kleiner als die Zeitkonstante der jeweiligen Messzelle ist, so dass jeder Messwert einen Zeitverzögerungsfehler aufweist.

Eine weitere vorteilhafte Ausgestaltung des Verfahrens zeichnet sich dadurch aus, dass die Zeitkonstante einer jeden Messzelle durch einen thermischen Widerstand der jeweiligen Messzelle und eine thermische Kapazität der jeweiligen Messzelle bestimmt ist.

Eine weitere vorteilhafte Ausgestaltung des Verfahrens zeichnet sich dadurch aus, dass die Messdauer kleiner als die Hälfte der Zeitkonstante der jeweiligen Messzelle ist.

Eine weitere vorteilhafte Ausgestaltung des Systems zeichnet sich dadurch aus, dass der Prädiktionswert in Schritt d) mittels der Prozessoreinheit für die Temperatur im Erfassungsbereich einer Messzelle durch Extrapolation der Messwerte der jeweiligen Messzelle oder durch Multiplikation eines Differenzwerts, der durch die Differenz zwischen dem aktuellen Messwert der jeweiligen Messzelle und einem vorangegangen Messwert der gleichen Messzelle bestimmt ist, mit einem vorbestimmten Faktor zwischen 0,5 und 0,8, insbesondere mit einem Faktor von 0,632, ermittelt wird.

Eine weitere vorteilhafte Ausgestaltung des Verfahrens zeichnet sich dadurch aus, dass die Messzellen in Schritt a) die Infrarotstrahlung in den zugehörigen Erfassungsbereichen mit einer Frequenz von mindestens 20 Hz periodisch erfassen.

Eine weitere vorteilhafte Ausgestaltung des Verfahrens zeichnet sich dadurch aus, dass Schritt c) einen Teilschritt c.1) aufweist:
c.1) Tiefpassfilterung der über das Messsignal empfangenen Messwerte mittels der Prozessoreinheit, so dass die daraus resultierenden Messwerte für die Ermittlung der Körperwärme und/oder der Prädiktionswerte dienen.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Figur 1 zeigt eine erfindungsgemäße Ausgestaltung des Systems in einer schematischen Ansicht.
Figur 2 zeigt eine erfindungsgemäße Ausgestaltung des Detektorarrays in einer schematischen Querschnittsansicht.
Figur 3 zeigt einen vorteilhaften Verlauf der Messwerte einer Messzelle in Reaktion auf einen sprunghaften Anstieg einer erfassten Infrarotstrahlung in einer schematischen Darstellung.
Figur 4 zeigt eine weitere vorteilhafte Ausgestaltung des Systems.
Figur 5 zeigt eine erfindungsgemäße Ausgestaltung eines Ablaufplans des Verfahrens.

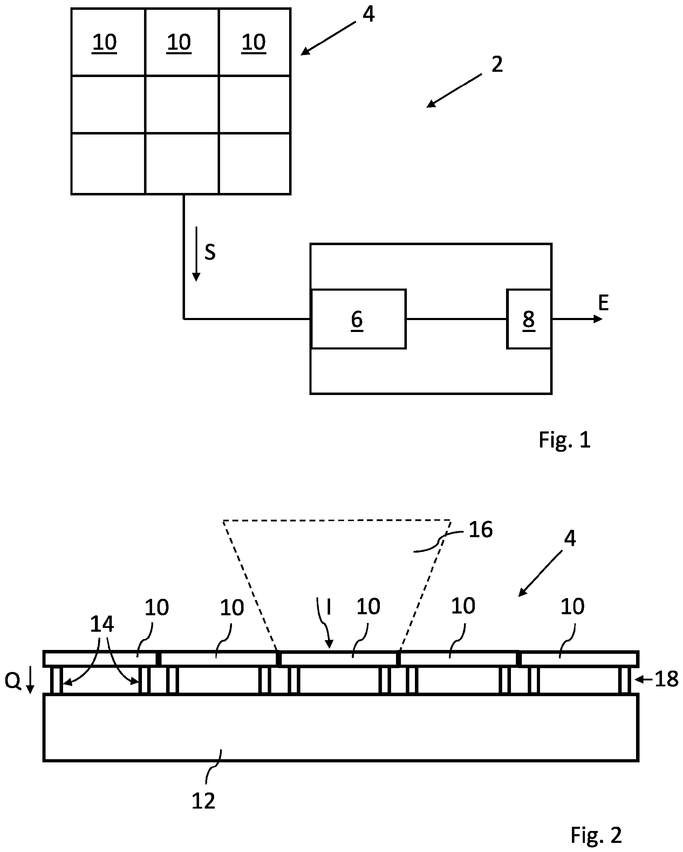

In der Figur 1 ist eine erfindungsgemäße Ausgestaltung des Systems 2 schematisch dargestellt. Das System 2 weist ein Detektorarray 4, eine Prozessoreinheit 6 und eine Signalschnittstelle 8 auf.

Die Signalschnittstelle 8 ist ausgebildet, um ein Bildsignal E bereitzustellen, das ein Wärmebild repräsentiert. Das System 2 dient deshalb zur Ermittlung eines Wärmebilds.

In der Figur 2 ist das Detektorarray 4 des Systems 2 in einer schematischen Querschnittsansicht dargestellt. Das Detektorarray 4 weist eine Vielzahl von bolometrischen Messzellen 10 und einen Grundkörper 12 auf. Der Grundkörper 12 weist eine vorbestimmte, thermische Wärmekapazität auf. Die thermische Wärmekapazität des Grundkörpers 12 wird auch kurz als Wärmekapazität des Grundkörpers 12 bezeichnet.

Jede Messzelle 10 ist zur Erfassung von Infrarotstrahlung I in einem der jeweiligen Messzelle 10 zugeordneten Erfassungsbereich 16 ausgebildet. Durch die erfasste Infrarotstrahlung I erwärmt sich die Messzelle 10. Jede Messzelle 10 ist über eine zugehörige Verbindung 14 mit dem Grundkörper 12 verbunden. Jede Verbindung 14 zwischen der jeweiligen Messzelle 10 und dem Grundkörper 12 weist eine vorbestimmte Wärmeleitfähigkeit auf. Über die einer Messzelle 10 zugehörigen Verbindung 14 kann deshalb Wärme von der Messzelle 10 zum Grundkörper 12, und in umgekehrter Richtung, übertragen werden. Bevorzugt ist es vorgesehen, dass eine Isolationsschicht 18 zwischen den Messzellen 10 und dem Grundkörper 12 ausgebildet ist. Diese Isolationsschicht 18 kann von Luft, insbesondere einem annährend unter Vakuum stehenden Raum, gebildet sein. Die Isolationsschicht 18 ist also zwischen dem Grundkörper 12 und der Vielzahl der Messzellen 10 angeordnet. Vorzugsweise sind die Messzellen 10 in einer gemeinsamen Ebene angeordnet. Die Messzellen 10 können dabei in einer Reihe oder einer Zeile angeordnet sein. Bevorzugt ist es jedoch vorgesehen, dass die Messzellen 10, wie es schematisch aus der Figur 1 zu entnehmen ist, matrixförmig, also in einer Vielzahl von Zeilen und Reihen, angeordnet sind.

Die einer Messzelle 10 zugehörige Verbindung 14 führt durch die Isolationsschicht 18 zu dem Grundkörper 12. Bevorzugt ist es vorgesehen, dass jede der Verbindungen 14 elektrisch leitfähig ist, um einen elektrischen Widerstand der jeweiligen Messzelle 10 erfassen zu können, jedoch soll die Verbindung 14 möglichst wenig Wärme pro Zeiteinheit transportieren können. Dadurch soll verhindert werden, dass durch Infrarotstrahlung I auf die jeweilige Messzelle 10 übertragene Wärmeenergie an den Grundkörper 12 weitergeleitet wird. In der Praxis kann dieses jedoch nicht ganz ausgeschlossen werden. Oftmals ist die einer Messzelle 10 zugehörige Verbindung 14 durch zwei elektrisch leitfähige Leitungen, beispielsweise aus Kupfer oder Gold, gebildet, die wie Elektroden für die jeweilige Messzelle 10 wirken. Jede der Messzellen 10 ist als eine bolometrische Messzelle ausgebildet. Ihr elektrischer Widerstand ändert sich deshalb in Abhängigkeit der Temperatur der jeweiligen Messzelle 10.

Dem Grundkörper 12 kann eine Auswerteschaltung (nicht dargestellt) zugeordnet sein, die über die Verbindungen 14 mit der Vielzahl der Messzellen 10 gekoppelt ist. Über die Kopplung kann die Auswerteschaltung den elektrischen Widerstand der Messzellen 10 erfassen und somit für jede der Messzellen 10 einen entsprechenden Messwert bereitstellen. Die Auswerteschaltung ist anteilig jeder der Messzellen 10 funktional zugeordnet. Wenn also von einem Messwert einer Messzelle 10 gesprochen wird, ist dies vorzugsweise der mithilfe der Auswerteschaltung bereitgestellte Messwert für die jeweilige Messzelle 10. Was die Wärmekapazität betrifft, ist die Auswerteschaltung jedoch dem Grundkörper 12 zugeordnet. Das bedeutet, dass thermische Wärme, die von einer der Messzellen 10 über die zugehörige Verbindung 14 an den Grundkörper 12 übertragen wird und von dem Material des Grundkörpers 12 gespeichert wird, auch anteilig von dem Material der Auswerteschaltung gespeichert sein kann.

Jede der Messzellen 10 ist als Zeitverzögerungsglied mit einer Zeitkonstante T zur Erzeugung eines die erfasste Infrarotstrahlung I repräsentierenden Messwerts M ausgebildet, der eine Temperatur im Erfassungsbereich 16 der jeweiligen Messzelle 10 repräsentiert und einen Messwertfehler umfasst, der durch einen Wärmestrom Q über die Verbindung 14 der jeweiligen Messzelle 10 zum Grundkörper 12 verursacht ist.

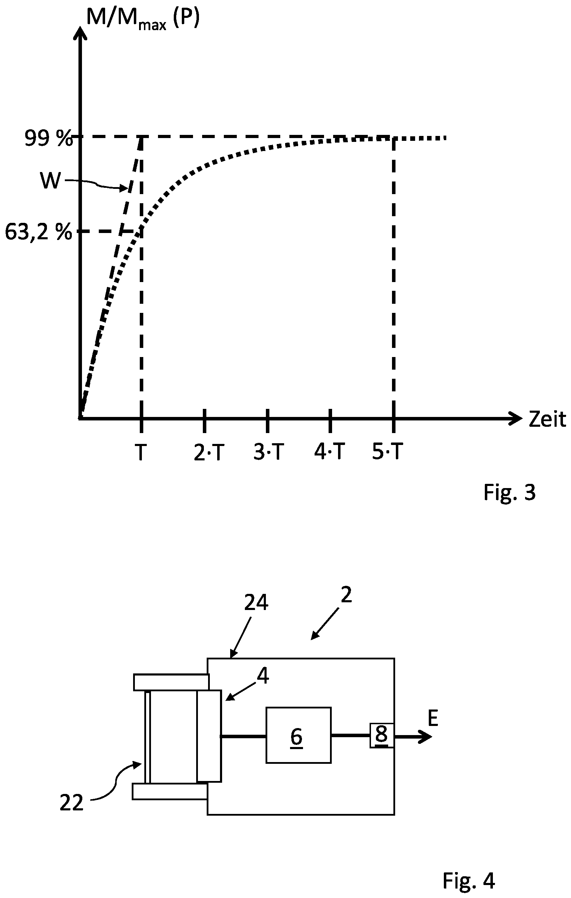

In der Figur 3 ist der Verlauf einer Vielzahl von Messwerten M normiert auf den Maximalwert M_{Max} der Messwerte M im statischen Zustand wiedergegeben. Die in Figur 3 gezeigte Kurve der Messwerte M zeigt den Verlauf, den der Messwert M annimmt, wenn eine sprunghafte Änderung der Intensität der Infrarotstrahlung I im Erfassungsbereich 16 der jeweiligen Messzelle 10 auftritt. Jeder Messwert ist durch einen Punkt der Kurve gezeigt. Der Messwert M steigt dabei fortlaufend mit der Zeit an. Nach Ablauf der Zeit, die der einfachen Zeitkonstante T entspricht, nimmt der Messwert M dabei 63,2 % des zugehörigen Maximalwerts M_{Max} an. Nach etwa dem Fünffachen der Zeitkonstante, also 5T, entspricht der Messwert M etwa 99 % des zugehörigen Maximalwerts M_{Max}. In Figur 3 ist deshalb der Verlauf der periodisch erfassten Messwerte M einer Messzelle 10 bei einem sprunghaften Anstieg der Intensität der Infrarotstrahlung I gezeigt, wenn die Messzelle 10 als ein Zeitverzögerungsglied erster Ordnung mit einer zugehörigen Zeitkonstante T ausgebildet ist. Grundsätzlich kann eine Messzelle 10 auch durch ein Zeitverzögerungsglied höherer Ordnung repräsentiert sein.

Für die weitere Erörterung wird jedoch vereinfacht davon ausgegangen, dass jede Messzelle 10 als ein Zeitverzögerungsglied erster Ordnung mit einer zugehörigen Zeitkonstante T ausgebildet ist.

Wird Infrarotstrahlung I im Erfassungsbereich 16 einer Messzelle 10 durch die jeweiligen Messzelle 10 erfasst, verursacht die Infrarotstrahlung I eine Erwärmung der Messzelle 10, was zu einer Veränderung des elektrischen Widerstands der Messzelle 10 führt. Diese Veränderung des elektrischen Widerstands kann wiederum durch die Auswerteschaltung erfasst werden, um das Messsignal S zu erzeugen. Die Erwärmung der Messzelle 10 führt jedoch auch zu einem Wärmestrom Q von der jeweiligen Messzelle 10 über die zugehörige Verbindung 14 zum Grundkörper 12. Dieser Wärmestrom Q verursacht eine Erwärmung des Grundkörpers 12. Der Grundkörper 12 hat eine vorbestimmte Wärmekapazität, sodass der Grundkörper 12 Wärme speichern kann, die von einer Messzelle 10 über die zugehörige Verbindung 14 zum Grundkörper 12 gelangt. Eine besonders starke Erwärmung der Messzelle 10 oder die Erwärmung der Messzelle 10 über einen längeren Zeitraum kann deshalb trotz der vorzugsweise geringen Wärmeleitfähigkeit der Verbindung 14 einer Messzelle 10 zu einer nicht vernachlässigbaren Erwärmung des Grundkörpers 12 führen.

Oftmals tritt Infrarotstrahlung I im Erfassungsbereich 16 einer Messzelle 10 nicht dauerhaft auf. Deshalb gibt es auch oftmals Zeitphasen, in denen nur eine geringe Intensität an Infrarotstrahlung I in einem Erfassungsbereich 16 einer Messzelle 10 ist. Auch diese geringe Intensität der Infrarotstrahlung I führt zu einer - wenn auch sehr kleinen - Erwärmung der Messzelle 10. Grundsätzlich kann diese Infrarotstrahlung I mittels der Messzelle 10 erfasst werden. Allerdings ist diese Erfassung erschwert, wenn der Grundkörper 12 zuvor erwärmt wurde. Denn in diesem Fall kann auch ein Wärmestrom Q von dem Grundkörper 12 über die Verbindung 14 zu der jeweiligen Messzelle 10 gelangen, die die Infrarotstrahlung I mit der geringen Intensität aus dem zugehörigen Erfassungsbereich 16 erfassen soll. Der Wärmestrom Q von dem Grundkörper 12 zu der Messzelle 10 verursacht deshalb einen Messwertfehler des Messwerts M, sodass der Messwert M tatsächlich nicht exakt die im Erfassungsbereich 16 auftretende Infrarotstrahlung I repräsentiert.

Der von einer bolometrischen Messzelle 10 erzeugte Messwert M unterliegt deshalb nicht nur einer nachteiligen Zeitverzögerung sondern auch einem Messwertfehler. Vor diesem Hintergrund ist die Prozessoreinheit 6 vorzugsweise derart ausgestaltet, um die Zeitverzögerung des Messwerts M einer Messzelle 10 zu kompensieren und dadurch einen Prädiktionswert P bereitzustellen, der eine Voraussagetemperatur im Erfassungsbereich 16 der jeweiligen Messzelle 10 repräsentiert, wobei die Voraussagetemperatur bzw. der Prädiktionswert P um die Zeitverzögerung kompensiert ist, sodass die vom Prädiktionswert repräsentierte Voraussagetemperatur V eine Temperatur im Erfassungsbereich 16 ist, die nach einer Zeit von dem Fünffachen der Zeitkonstante T auftreten würde. Mit anderen Worten ist die Voraussagetemperatur eine Temperatur im Erfassungsbereich 16 im Gleichgewichtszustand der Messzelle 10. Der Prädiktionswert P ist deshalb gegenüber dem tatsächlichen Messwert M der Messzelle 10 um die Zeitverzögerung bereinigt und steht deshalb wesentlich früher als der Messwert M im Gleichgewichtszustand zur Verfügung. Der Prädiktionswert P wird deshalb als ein um die Zeitverzögerung kompensierter Prädiktionswert P bezeichnet.

Der Ermittlung des Prädiktionswerts P für den Messwert M einer Messzelle 10 geht die Erkenntnis voraus, die sich aus dem exponentiellen Verlauf der Messwerte M aus der Figur 3 schematisch ergibt. Bei einer sprunghaften Änderung der Intensität der Infrarotstrahlung I im Erfassungsbereich 16 einer Messzelle 10 steigt der Messwert M zunächst etwa linear an. Wird die Infrarotstrahlung I im Erfassungsbereich 16 der Messzelle 10 periodisch erfasst, sodass in einer entsprechenden Periodizität Messwerte M erzeugt werden, so kann mit zwei aufeinander folgenden Messwerten M und der Erkenntnis über den linearen Verlauf am linken unteren Ende der Kurve aus Figur 3 eine Abschätzung darüber getroffen werden, wie groß der Messwert M im eingeschwungenen Zustand bei der Zeit von 5T sein wird. Dieser abgeschätzte Messwert ist sodann der Prädiktionswert P. Der Prädiktionswert P kann also aus der Steigung der gestrichelt dargestellten Linie W und der Differenz von zwei aufeinander folgenden Messwerten M ermittelt werden. Die Steigung W kann aus der Zeitkonstante T der Messzelle 10 abgeleitet werden.

Um eine Mehrzahl von Messwerten M zu erhalten, die die erfasste Infrarotstrahlung I im Erfassungsbereich 16 der jeweiligen Messzelle 10 repräsentieren, ist es bevorzugt vorgesehen, dass das Detektorarray 4 ausgebildet ist, Infrarotstrahlung I periodisch mittels der zugehörigen Messzelle 10 zu erfassen, ein Messsignal S zu erzeugen, dass die von den Messzellen 10 erzeugten Messwerte M repräsentiert, und das Messsignal S an die Prozessoreinheit 6 zu übertragen. Die Prozessoreinheit 6 ist wiederum vorzugsweise dazu konfiguriert, für jeden aktuellen Messwert M einer jeden Messzelle 10 einen um die Zeitverzögerung der jeweiligen Messzelle 10 kompensierten Prädiktionswert P basierend auf dem aktuellen Messwert M der jeweiligen Messzelle 10 und mindestens einem zeitlich vorangegangenen Messwert M der gleichen Messzelle 10 zu ermitteln, sodass der jeweilige Prädiktionswert P eine aktuelle, um die Zeitverzögerung kompensierte Voraussagetemperatur im Erfassungsbereich 16 der jeweiligen Messzelle 10 repräsentiert.

Der Prädiktionswert P kann deshalb eine Voraussage für den maximalen Wert des Messwerts MMax der jeweiligen Messzelle 10 angeben, der sich einstellen würde, wenn die Infrarotstrahlung I bei gleichbleibender Intensität über einen Zeitraum von dem Fünffachen der Zeitkonstante T der Messzelle 10, also 5T, gemessen wird. Da der Prädiktionswert P die entsprechende Voraussagetemperatur im Erfassungsbereich 16 repräsentiert und der Prädiktionswert P bereits vor Ablauf des Fünffachen der Zeitkonstante T, nämlich 5T, ermittelbar ist, erlaubt der Prädiktionswert P eine besonders schnelle Feststellung der Voraussagetemperatur. Mit anderen Worten kann die Zeitverzögerung der jeweiligen Messzelle 10 mit der Ermittlung des Prädiktionswerts P rechnerisch überwunden werden.

Zuvor wurde jedoch bereits festgestellt, dass der Messwert M und somit auch der Prädiktionswert P einen Messwertfehler umfassen, der die von dem Messwert M repräsentierte Temperatur bzw. die von dem Prädiktionswert P repräsentierte Voraussagetemperatur verfälscht. Der entsprechende Messwertfehler ist durch einen Wärmestrom Q verursacht, der zwischen der jeweiligen Messzelle 10 und dem Grundkörper 12 entstehen kann. Der Messwertfehler hängt von der Körperwärme des Grundkörpers 12 ab. Es ist deshalb vorgesehen, dass die Prozessoreinheit 6 konfiguriert ist, eine von dem Grundkörper 12 gespeicherte Körperwärme basierend auf der Wärmekapazität des Grundkörpers 12, auf der Wärmeleitfähigkeit der Verbindung 14 und dem Messsignal S zu ermitteln. Das Messsignal S repräsentiert die von den Messzellen 10 erfassten Messwerte M. Die Prozessoreinheit 6 kann beispielsweise dazu ausgebildet sein, die Körperwärme des Grundköpers 12 iterativ mittels der von den Messwerten M repräsentierten Temperaturen, der Wärmekapazität des Grundkörpers 12 und der Wärmeleitfähigkeit der Verbindung 14 zu ermitteln. Anhand der von den Messsignalen S repräsentierten Temperaturen kann beispielsweise darauf geschlossen werden, wie groß der Wärmestrom Q zu dem Grundkörper 12 ist. Dabei kann auch berücksichtigt werden, welche Körperwärme der Grundkörper 12 bereits zuvor (in dem vorherigen Iterationsschritt) hat. Bei der Ermittlung der vom Grundkörper 12 gespeicherten Körperwärme kann das Messsignal S auch indirekt berücksichtigt werden, beispielsweise durch die Prädiktionswerte P anstatt der Messwerte M. Wenn die vom Grundkörper 12 gespeicherte Körperwärme ermittelt ist, kann dies bei der Korrektur der Prädiktionswerte P um den Messwertfehler berücksichtigt werden, sodass die Prozessoreinheit 6 vorzugsweise dazu konfiguriert ist, für jeden aktuellen Prädiktionswert P einen um den Messwertfehler korrigierten Temperaturwert im Erfassungsbereich 16 der jeweiligen Messzelle 10 basierend auf dem jeweiligen Prädiktionswert P, auf der Wärmeleitfähigkeit der jeweiligen Verbindung 14 und entweder direkt oder indirekt auf dem aktuellen Wert der Körperwärme zu ermitteln.

Der Prädiktionswert P für den Erfassungsbereich 16 einer Messzelle 10 repräsentiert die Voraussagetemperatur in dem jeweiligen Erfassungsbereich 16. Daraus kann abgeleitet werden, welche Temperatur an der jeweiligen Messzelle 10 anliegt. Aus dem aktuellen Wert der Körperwärme des Grundkörpers 12 und der zuvor genannten Temperatur der Messzelle 10 kann außerdem abgeleitet werden, in welche Richtung ein Wärmestrom Q zwischen der Messzelle 10 und dem Grundkörper 12 über die Verbindung 14 der zugehörigen Messzelle 10 erfolgt. Dieser Wärmestrom Q verursacht den Messfehler. Ist deshalb der Wärmestrom Q gemäß der vorherigen Erläuterung ermittelt, so kann aus dem aktuellen Prädiktionswert P und der Erkenntnis über den Wärmestrom Q ein um den Messfehler korrigierter Temperaturwert ermittelt werden, der die korrigierte Temperatur im Erfassungsbereich 16 der jeweiligen Messzelle 10 repräsentiert. Der Temperaturwert bietet den Vorteil, dass dieser um den genannten Messwertfehler befreit ist und außerdem entsprechend des Prädiktionswerts P besonders schnell, nämlich deutlich vor dem Ablauf der Zeit von dem Fünffachen der Zeitkonstante 5T ermittelt werden kann. Die Prozessoreinheit 6 ist vorzugsweise dazu ausgebildet, die zuvor erläuterten Schritte auszuführen.

Aufgrund der Ermittlung der Temperaturwerte für die Vielzahl der Erfassungsbereiche 16 der entsprechenden Anzahl der Messzellen 10 ist es möglich, ein Wärmebild zu ermitteln, das die Wärmeverteilung in einem Raum wiedergibt, der durch die entsprechende Vielzahl der Erfassungsbereiche 16 gebildet ist, und zwar auch dann, wenn sich die Erfassungsbereiche 16 teilweise überlappen. Die Prozessoreinheit 6 ist deshalb vorzugsweise dazu konfiguriert, ein Wärmebild basierend auf den aktuellen Temperaturwerten für die Erfassungsbereiche 16 der Messzellen 10 zu ermitteln. Dieses Wärmebild repräsentiert vorzugsweise die Wärmeverteilung in dem zuvor genannten Raum. Außerdem ist es bevorzugt vorgesehen, dass die Signalschnittstelle 8 ausgestaltet ist, ein Bildsignal E bereitzustellen und/oder zu übertragen, das das Wärmebild repräsentiert. Das Bildsignal E kann zuvor von der Prozessoreinheit 6 ermittelt worden sein. Die Signalschnittstelle 8 kann dazu ausgebildet sein, das Bildsignal E zu übertragen, insbesondere zu senden. Die Signalschnittstelle 8 kann gemeinsam mit der Prozessoreinheit 6 eine gemeinsame Einheit 20 bilden. Alternativ oder ergänzend ist es möglich, dass die Signalschnittstelle 8 einen Teil der Prozessoreinheit 6 bildet. So kann die Signalschnittstelle 8 einen integralen Teil der Prozessoreinheit 6 bilden. Das Bildsignal E kann an weitere Bauteile des Systems 2 gesendet werden. Es ist aber auch möglich, dass das Bildsignal E an eine Vorrichtung gesendet wird, die nicht Bestandteil des Systems 2 ist.

In der Figur 4 ist eine weitere vorteilhafte Ausgestaltung des Systems 2 schematisch in einer Querschnittsdarstellung wiedergegeben. Das System 2 ist dabei von einer Wärmebildkamera gebildet. Das System 2 weist wie zuvor auch das Detektorarray 4, die Prozessoreinheit 6 und die Signalschnittstelle 8 auf. Das System 2 bzw. die Wärmebildkamera weist außerdem eine Linse 22 auf, die zum Fokussieren von Infrarotstrahlung I aus dem Erfassungsbereich 16 auf die Messzellen 10 des Detektorarrays 4 ausgebildet ist. Die Messzellen 10 sind also gegenüberliegend zu der Linse 22 angeordnet. Außerdem ist das Detektorarray 4 an einer Außenseite gegenüberliegend zu der Linse 22 am Gehäuse 24 der Wärmebildkamera angeordnet oder in die entsprechende Außenseite integriert. Die Prozessoreinheit 6 und die Signalschnittstelle 8 sind vorzugsweise innerhalb des Gehäuses 24 angeordnet.

Aus der Zusammenschau der Figuren 1 und 4 ist außerdem ersichtlich, dass eine Signalverbindung zwischen dem Detektorarray 4 und der Prozessoreinheit 6 besteht. Diese Signalverbindung dient zum Übertragen des Messsignals S von dem Detektorarray 4 an die Prozessoreinheit 6. Eine weitere Signalverbindung kann zwischen der Prozessoreinheit 6 und der Signalschnittstelle 8 ausgebildet sein. Insbesondere dann, wenn die Signalschnittstelle 8 separat zu der Prozessoreinheit 6 ausgebildet ist. Anderenfalls kann auf diese Signalverbindung verzichtet werden. Die Prozessoreinheit 6 kann über die genannte Signalverbindung das Bildsignal E an die Signalschnittstelle 8 senden, sodass das Bildsignal E von der Signalschnittstelle 8 weiterübertragen, insbesondere gesendet werden kann.

Bereits zuvor wurde erläutert, dass das Detektorarray 4 ausgebildet ist, Infrarotstrahlung I periodisch mittels der zugehörigen Messzellen 10 zu erfassen. Dabei ist es bevorzugt vorgesehen, dass das Detektorarray 4 ausgebildet ist, so dass jede Messzelle 10 die Infrarotstrahlung I im zugehörigen Erfassungsbereich 16 periodisch mit einer Messdauer erfasst, die kleiner als die Zeitkonstante T der jeweiligen Messzelle ist. Außerdem ist es bevorzugt vorgesehen, dass das Detektorarray 4 ausgebildet ist, so dass die Messzellen 10 die Infrarotstrahlung I in den zugehörigen Erfassungsbereichen 16 mit einer Frequenz von mindestens 20 Hz, mindestens 30 Hz, mindestens 50 Hz oder mindestens 100 Hz periodisch erfassen. Die genannte Frequenz bezieht sich dabei auf die Frequenz der Erfassung für die jeweilige Messzelle 10. Umso größer die Frequenz ist und umso kleiner die Messdauer ist, desto besser und genauer kann der Prädiktionswert ermittelt werden, der von einem Zeitverzögerungsfehler befreit ist, der durch die Zeitverzögerung der Messzelle zwischen der tatsächlich auftretenden Infrarotstrahlung I an der Messzelle 10 und dem Messwert M der jeweiligen Messzelle 10 auftritt. Es ist deshalb bevorzugt vorgesehen, dass die Messdauer jeder Messzelle kleiner als die Hälfte der Zeitkonstante T der jeweiligen Messzelle 10 ist.

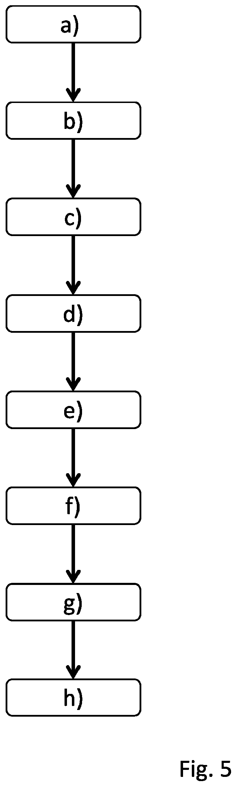

In der Figur 5 ist eine erfindungsgemäße Ausgestaltung des Verfahrens dargestellt. Das Verfahren dient zur Ermittlung eines Wärmebilds mittels des Systems 2. Das System 2 wird also dazu verwendet, um das Verfahren mit den Schritten a) bis h) auszuführen, wie sie im Folgenden erläutert sind:
a) Periodisches Erfassen von Infrarotstrahlung I mittels der Messzellen 10 des Detektorarrays 4;
b) Erzeugen eines Messsignals S, das die von den Messzellen 10 erzeugten Messwerte M repräsentiert, mittels des Detektorarrays 4;
c) Übertragen des Messsignals S von dem Detektorarray 4 an die Prozessoreinheit 6;
d) Ermitteln einer vom Grundkörper 12 gespeicherten Körperwärme mittels der Prozessoreinheit 6 und basierend auf der Wärmekapazität, auf der Wärmeleitfähigkeit und entweder direkt oder indirekt auf dem Messsignal S;
e) Ermitteln für jeden aktuellen Messwert M einer jeden Messzelle 10 eines um die Zeitverzögerung der jeweiligen Messzelle kompensierten Prädiktionswert P mittels der Prozessoreinheit 6 und basierend auf dem aktuellen Messwert M der jeweiligen Messzelle 10 und mindestens einem zeitlich vorangegangenen Messwert der gleichen Messzelle 10, so dass der Prädiktionswert P eine aktuelle, um die Zeitverzögerung kompensierte Voraussagetemperatur im Erfassungsbereich 16 der jeweiligen Messzelle repräsentiert;
f) Ermitteln für jeden aktuellen Prädiktionswert P eines den Messwertfehler korrigierten Temperaturwerts im Erfassungsbereich 16 der jeweiligen Messzelle 10 mittels der Prozessoreinheit 6 basierend auf dem jeweiligen Prädiktionswert P, auf der Wärmeleitfähigkeit und entweder direkt oder indirekt auf dem aktuellen Wert der Körperwärme;
g) Ermitteln eines Wärmebilds mittels der Prädiktionseinheit und basierend auf den aktuellen Temperaturwerten für die Erfassungsbereiche 16 der Messzellen 10;
h) Bereitstellen eines Bildsignals E mittels der Signalschnittstelle 8, wobei das Bildsignal E das Wärmebild repräsentiert.

Bezüglich der Vorteile und technischen Effekte wird auf die vorteilhaften Erläuterungen Bezug genommen, wie sie im Zusammenhang mit dem System 2 zu den Figuren 1 bis 4 bereits erläutert worden ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- E: Bildsignal
- I: Infrarotstrahlung
- M: Messwert
- P: Prädiktionswert
- Q: Wärmestrom
- S: Messsignal
- T: Zeitkonstante
- 2: System
- 4: Detektorarray
- 6: Prozessoreinheit
- 8: Signalschnittstelle
- 10: Messzelle
- 12: Grundkörper
- 14: Verbindung
- 16: Erfassungsbereich
- 18: Isolationsschicht
- 20: gemeinsame Einheit
- 22: Linse
- 24: Gehäuse

## Patentansprüche

1. System (2) zur Ermittlung eines Wärmebilds, aufweisend:
ein Detektorarray (4),
eine Prozessoreinheit (6), und
eine Signalschnittstelle (8),
wobei das Detektorarray (4) eine Vielzahl von bolometrischen Messzellen (10) und einen Grundkörper (12) aufweist, der eine vorbestimmte, thermische Wärmekapazität aufweist,
wobei jede Messzelle (10) über eine zugehörige Verbindung (14), die eine vorbestimmte, thermische Leitfähigkeit aufweist, direkt oder indirekt mit dem Grundkörper (12) verbunden ist, so dass Wärme zwischen jeder Messzelle (10) und dem Grundkörper (12) übertragbar ist,
wobei jede Messzelle (10) zur Erfassung von Infrarotstrahlung I in einem der jeweiligen Messzelle (10) zugeordneten Erfassungsbereich (16) und als Zeitverzögerungsglied mit einer Zeitkonstante T zur Erzeugung eines die erfasste Infrarotstrahlung I repräsentierenden Messwerts M ausgebildet ist, der eine Temperatur im Erfassungsbereich (16) der jeweiligen Messzelle (10) repräsentiert und einen Messwertfehler umfasst, der durch einen Wärmestrom Q über die Verbindung (14) der jeweiligen Messzelle (10) zum Grundkörper (12) verursacht ist, wobei das Detektorarray (4) ausgebildet ist, Infrarotstrahlung I periodisch mittels der zugehörigen Messzellen (10) zu erfassen, ein Messsignal S zu erzeugen, das die von den Messzellen (10) erzeugten Messwerte M repräsentiert, und das Messsignal S an die Prozessoreinheit (6) zu übertragen,
wobei die Prozessoreinheit (6) konfiguriert ist, eine vom Grundkörper (12) gespeicherte Körperwärme basierend auf der Wärmekapazität, auf der thermischen Leitfähigkeit und entweder direkt oder indirekt auf dem Messsignal S zu ermitteln, wobei die Prozessoreinheit (6) konfiguriert ist, für jeden aktuellen Messwert Meiner jeden Messzelle (10) einen um die Zeitverzögerung der jeweiligen Messzelle (10) kompensierten Prädiktionswert P basierend auf dem aktuellen Messwert M der jeweiligen Messzelle (10) und mindestens einem zeitlich vorangegangen Messwert M der gleichen Messzelle (10) zu ermitteln, so dass der jeweilige Prädiktionswert P eine aktuelle, um die Zeitverzögerung kompensierte Voraussagetemperatur im Erfassungsbereich (16) der jeweiligen Messzelle (10) repräsentiert,
wobei die Prozessoreinheit (6) konfiguriert ist, für jeden aktuellen Prädiktionswert P einen um den Messwertfehler korrigierten Temperaturwert im Erfassungsbereich (16) der jeweiligen Messzelle (10) basierend auf dem jeweiligen Prädiktionswert P, auf der thermischen Leitfähigkeit und entweder direkt oder indirekt auf dem aktuellen Wert der Körperwärme zu ermitteln, und
wobei die Prozessoreinheit (6) konfiguriert ist, ein Wärmebild basierend auf den aktuellen Temperaturwerten für die Erfassungsbereiche (16) der Messzellen (10) zu ermitteln, und
wobei die Signalschnittstelle (8) ausgebildet ist, ein Bildsignal E bereitzustellen, das das Wärmebild repräsentiert.

2. System (2) nach einem der vorhergehenden Ansprüche, **dadurch gekennzeichnet, dass** jede Messzelle (10) eine Sensorschicht zur Absorption von Infrarotstrahlung I aufweist, der Grundkörper (12) ein Substrat mit einer Ausleseschaltung aufweist, und jede Messzelle (10) über zugehörige Elektroden mit dem Grundkörper (12) verbunden ist, so dass die Elektroden einer Messzelle (10) die Verbindung (14) der jeweiligen Messzelle (10) zum Grundkörper (12) bilden.

3. System (2) nach einem der vorhergehenden Ansprüche **dadurch gekennzeichnet, dass** die Prozessoreinheit (6) konfiguriert ist, die vom Grundkörper (12) gespeicherte Körperwärme basierend auf der Wärmekapazität, auf der thermischen Leitfähigkeit und den Prädiktionswerten P zu ermitteln.

4. System (2) nach einem der vorhergehenden Ansprüche 1 bis 2, **dadurch gekennzeichnet, dass** die Prozessoreinheit (6) konfiguriert ist, die Körperwärme basierend auf der zuletzt ermittelten Körperwärme, der Wärmekapazität, der thermischen Leitfähigkeit sowie entweder dem mindestens einen aktuellen Messwert M oder dem mindestens einen aktuellen Prädiktionswert P zu ermitteln.

5. System (2) nach dem vorhergehenden Anspruch, **dadurch gekennzeichnet, dass** die Prozessoreinheit (6) konfiguriert ist, eine Körpertemperatur basierend auf der Wärmekapazität des Grundkörpers (12) und dem aktuellen Wert der Körperwärme zu ermitteln, und wobei die Prozessoreinheit (6) konfiguriert ist, für jeden aktuellen Prädiktionswert P den um den Messwertfehler korrigierten Temperaturwert im Erfassungsbereich (16) der jeweiligen Messzelle (10) basierend auf dem Prädiktionswert P der jeweiligen Messzelle (10), der thermischen Leitfähigkeit der Verbindung (14) zu der jeweiligen Messzelle (10) und dem aktuellen Wert der Körpertemperatur des Grundkörpers (12) zu ermitteln.

6. System (2) nach einem der vorhergehenden Ansprüche, **dadurch gekennzeichnet, dass** das Detektorarray (4) ausgebildet ist, dass jede Messzelle (10) die Infrarotstrahlung I im zugehörigen Erfassungsbereich (16) periodisch mit einer Messdauer erfasst, die kleiner als die Zeitkonstante T der jeweiligen Messzelle (10) ist, so dass jeder Messwert M einen Zeitverzögerungsfehler aufweist.

7. System (2) nach dem vorhergehenden Anspruch, **dadurch gekennzeichnet, dass** die Zeitkonstante T einer jeden Messzelle (10) durch einen thermischen Widerstand der jeweiligen Messzelle (10) und eine thermische Kapazität der jeweiligen Messzelle (10) bestimmt ist.

8. System (2) nach einem der vorhergehenden Ansprüche 6 bis 7, **dadurch gekennzeichnet, dass** die Messdauer kleiner als die Hälfte der Zeitkonstante T der jeweiligen Messzelle (10) ist.

9. System (2) nach einem der vorhergehenden Ansprüche, **dadurch gekennzeichnet, dass** die Prozessoreinheit (6) konfiguriert ist, den Prädiktionswert P für die Temperatur im Erfassungsbereich (16) einer Messzelle (10) durch Extrapolation der Messwerte M der jeweiligen Messzelle (10) oder durch Multiplikation eines Differenzwerts, der durch die Differenz zwischen dem aktuellen Messwert M der jeweiligen Messzelle (10) und einem vorangegangen Messwert M der gleichen Messzelle (10) bestimmt ist, mit einem vorbestimmten Faktor zwischen 0,5 und 0,8, insbesondere mit einem Faktor von 0,632, zu ermitteln.

10. System (2) nach einem der vorhergehenden Ansprüche, **dadurch gekennzeichnet, dass** das Detektorarray (4) ausgebildet ist, so dass die Messzellen (10) die Infrarotstrahlung I in den zugehörigen Erfassungsbereichen (16) mit einer Frequenz von mindestens 20 Hz periodisch erfassen.

11. System (2) nach einem der vorhergehenden Ansprüche, **dadurch gekennzeichnet, dass** die Prozessoreinheit (6) konfiguriert ist, die über das Messsignal S empfangenen Messwerte M mittels eines Tiefpasses zu filtern, so dass die daraus resultierenden Messwerte M für die Ermittlung der Körperwärme und/oder der Prädiktionswerte P dienen.

12. Verfahren zur Ermittlung eines Wärmebilds mittels eines Systems (2), das eine Prozessoreinheit (6), eine Signalschnittstelle (8) und ein Detektorarray (4) aufweist, das eine Vielzahl von bolometrischen Messzellen (10) und einen Grundkörper (12) mit einer vorbestimmten, thermischen Wärmekapazität aufweist, wobei jede Messzellen (10) über eine zugehörige Verbindung (14), die eine vorbestimmte, thermische Leitfähigkeit aufweist, direkt oder indirekt mit dem Grundkörper (12) verbunden sind, so dass Wärme zwischen jeder Messzelle (10) und dem Grundkörper (12)übertragbar ist, wobei jede Messzelle (10) zur Erfassung von Infrarotstrahlung I in einem der jeweiligen Messzelle (10) zugeordneten Erfassungsbereich (16) und als Zeitverzögerungsglied mit einer Zeitkonstante T zur Erzeugung eines die erfasste Infrarotstrahlung I repräsentierenden Messwerts M ausgebildet ist, der eine Temperatur im Erfassungsbereich (16) der jeweiligen Messzelle (10) repräsentiert und einen Messwertfehler umfasst, der durch einen Wärmestrom über die Verbindung (14) der jeweiligen Messzelle (10) zum Grundkörper (12) verursacht ist, und wobei das Verfahren die folgenden Schritte aufweist:
a) Periodisches Erfassen von Infrarotstrahlung I mittels der Messzellen (10) des Detektorarrays (4);
b) Erzeugen eines Messsignals S, das die von den Messzellen (10) erzeugten Messwerte M repräsentiert, mittels des Detektorarrays (4);
c) Übertragen des Messsignal S von dem Detektorarray (4) an die Prozessoreinheit (6);
d) Ermitteln einer vom Grundkörper (12) gespeicherten Körperwärme mittels der Prozessoreinheit (6) und basierend auf der Wärmekapazität, auf der thermischen Leitfähigkeit und entweder direkt oder indirekt auf dem Messsignal (S);
e) Ermitteln für jeden aktuellen Messwert M einer jeden Messzelle (10) eines um die Zeitverzögerung der jeweiligen Messzelle (10) kompensierten Prädiktionswerts P mittels der Prozessoreinheit (6) und basierend auf dem aktuellen Messwert M der jeweiligen Messzelle (10) und mindestens einem zeitlich vorangegangen Messwert M der gleichen Messzelle (10), so dass der Prädiktionswert P eine aktuelle, um die Zeitverzögerung kompensierte Voraussagetemperatur im Erfassungsbereich (16) der jeweiligen Messzelle (10) repräsentiert;
f) Ermitteln für jeden aktuellen Prädiktionswert P eines um den Messwertfehler korrigierten Temperaturwerts im Erfassungsbereich (16) der jeweiligen Messzelle (10) mittels der Prozessoreinheit (6) und basierend auf dem jeweiligen Prädiktionswert P, auf der thermischen Leitfähigkeit und entweder direkt oder indirekt auf dem aktuellen Wert der Körperwärme;
g) Ermitteln eines Wärmebilds mittels der Prozessoreinheit (6) und basierend auf den aktuellen Temperaturwerten für die Erfassungsbereiche (16) der Messzellen (10); und
h) Bereitstellen eines Bildsignals E mittels der Signalschnittstelle (8), wobei das Bildsignal E das Wärmebild repräsentiert.

13. Verfahren nach dem vorhergehenden Anspruch, **dadurch gekennzeichnet, dass** das Verfahren einen weiteren, vor Schritt e) oder f) auszuführenden Schritt d.1) aufweist:
d.1) Ermitteln eines eine Wärmeverteilung im Grundkörper (12) repräsentierenden Parametervektors mittels der Prozessoreinheit (6) basierend auf der Wärmekapazität, auf der thermischen Leitfähigkeit und entweder direkt oder indirekt auf dem Messsignal.

14. Verfahren nach einem der vorhergehenden Ansprüche, **dadurch gekennzeichnet, dass** die vom Grundkörper (12) gespeicherte Körperwärme in Schritt d) basierend auf der Wärmekapazität, auf der thermischen Leitfähigkeit und den Prädiktionswerten P mittels der Prozessoreinheit (6) ermittelt wird.

## Claims

1. System (2) for determining a thermal image, comprising:
a detector array (4),
a processor unit (6), and
a signal interface (8),
wherein the detector array (4) comprises a multiplicity of bolometric measurement cells (10) and a main body (12) with a predetermined thermal heat capacity,
wherein each measurement cell (10) is directly or indirectly connected to the main body (12) via an associated connection (14) with a predetermined thermal conductivity, the connection being such that heat is transferable between each measurement cell (10) and the main body (12),
wherein each measurement cell (10) is designed to capture infrared radiation I in a capturing region (16) assigned to the respective measurement cell (10) and is designed as a time delay member with a time constant T for generating a measurement value M which represents the captured infrared radiation I and which represents a temperature in the capturing region (16) of the respective measurement cell (10) and which comprises a measurement value error caused by a heat flux Q via the connection (14) of the respective measurement cell (10) to the main body (12),
wherein the detector array (4) is designed to periodically capture infrared radiation I by means of the associated measurement cells (10), to generate a measurement signal S which represents the measurement values M generated by the measurement cells (10), and to transfer the measurement signal S to the processor unit (6),
wherein the processor unit (6) is configured to determine a body heat stored by the main body (12) on the basis of the heat capacity, the thermal conductivity and, either directly or indirectly, the measurement signal S,
wherein the processor unit (6) is configured to determine, for each current measurement value M of each measurement cell (10), a prediction value P, compensated by the time delay of the respective measurement cell (10), on the basis of the current measurement value M of the respective measurement cell (10) and at least one temporally preceding measurement value M from the same measurement cell (10), with the result that the respective prediction value P represents a current predicted temperature, compensated by the time delay, in the capturing region (16) of the respective measurement cell (10), wherein the processor unit (6) is configured to determine, for each current prediction value P, a temperature value, corrected by the measurement value error, in the capturing region (16) of the respective measurement cell (10) on the basis of the respective prediction value P, the thermal conductivity and, either directly or indirectly, the current value of the body heat, and
wherein the processor unit (6) is configured to determine a thermal image on the basis of the current temperature values for the capturing regions (16) of the measurement cells (10), and
wherein the signal interface (8) is designed to provide an image signal E which represents the thermal image.

2. System (2) according to any of the preceding claims, **characterized in that** each measurement cell (10) comprises a sensor layer for the absorption of infrared radiation I, the main body (12) comprises a substrate with a readout circuit, and each measurement cell (10) is connected via associated electrodes to the main body (12) such that the electrodes of a measurement cell (10) form the connection (14) of the respective measurement cell (10) to the main body (12).

3. System (2) according to any of the preceding claims, **characterized in that** the processor unit (6) is configured to determine the body heat stored by the main body (12) on the basis of the heat capacity, the thermal conductivity and the prediction values P.

4. System (2) according to any of the preceding Claims 1 to 2, **characterized in that** the processor unit (6) is configured to determine the body heat on the basis of the most recently determined body heat, the heat capacity, the thermal conductivity and either the at least one current measurement value M or the at least one current prediction value P.

5. System (2) according to the preceding claim, **characterized in that** the processor unit (6) is configured to determine a body temperature on the basis of the heat capacity of the main body (12) and the current value of the body heat, and wherein the processor unit (6) is configured to determine, for each current prediction value P, the temperature value, corrected by the measurement value error, in the capturing region (16) of the respective measurement cell (10) on the basis of the prediction value P of the respective measurement cell (10), the thermal conductivity of the connection (14) to the respective measurement cell (10) and the current value of the body temperature of the main body (12).

6. System (2) according to any of the preceding claims, **characterized in that** the detector array (4) is designed so that each measurement cell (10) periodically captures the infrared radiation I in the associated capturing region (16) over a measurement duration which is shorter than the time constant T of the respective measurement cell (10), with the result that each measurement value M has a time delay error.

7. System (2) according to the preceding claim, **characterized in that** the time constant T of each measurement cell (10) is determined by a thermal resistance of the respective measurement cell (10) and a thermal capacitance of the respective measurement cell (10).

8. System (2) according to any of the preceding Claims 6 to 7, **characterized in that** the measurement duration is shorter than half the time constant T of the respective measurement cell (10).

9. System (2) according to any of the preceding claims, **characterized in that** the processor unit (6) is configured to determine the prediction value P for the temperature in the capturing region (16) of a measurement cell (16) by extrapolating the measurement values M of the respective measurement cell (10) or by multiplying a difference value, determined by way of the difference between the current measurement value M of the respective measurement cell (10) and a preceding measurement value M of the same measurement cell (10), by a predetermined factor between 0.5 and 0.8, in particular by a factor of 0.632.

10. System (2) according to any of the preceding claims, **characterized in that** the detector array (4) is designed so that the measurement cells (10) periodically capture the infrared radiation I in the associated capturing regions (16) at a frequency of at least 20 Hz.

11. System (2) according to any of the preceding claims, **characterized in that** the processor unit (6) is configured to filter the measurement values M received via the measurement signal S by means of a low-pass filter such that the measurement values M resulting therefrom serve to determine the body heat and/or the prediction values P.

12. Method for determining a thermal image by means of a system (2) comprising a processor unit (6), a signal interface (8) and a detector array (4) which comprises a multiplicity of bolometric measurement cells (10) and a main body (12) with a predetermined thermal heat capacity, wherein each measurement cell (10) is directly or indirectly connected to the main body (12) via an associated connection (14) with a predetermined thermal conductivity, the connection being such that heat is transferable between each measurement cell (10) and the main body (12), wherein each measurement cell (10) is designed to capture infrared radiation I in a capturing region (16) assigned to the respective measurement cell (10) and is designed as a time delay member with a time constant T for generating a measurement value M which represents the captured infrared radiation I and which represents a temperature in the capturing region (16) of the respective measurement cell (10) and which comprises a measurement value error caused by a heat flux via the connection (14) of the respective measurement cell (10) to the main body (12), and wherein the method includes the following steps:
a) periodically capturing infrared radiation I by means of the measurement cells (10) of the detector array (4);
b) generating a measurement signal S which represents the measurement values M generated by the measurement cells (10), by means of the detector array (4);
c) transferring the measurement signal S from the detector array (4) to the processor unit (6);
d) determining a body heat stored by the main body (12) by means of the processor unit (6) and on the basis of the heat capacity, the thermal conductivity and, either directly or indirectly, the measurement signal (S);
e) determining, for each current measurement value M of each measurement cell (10), a prediction value P, compensated by the time delay of the respective measurement cell (10), by means of the processor unit (6) and on the basis of the current measurement value M of the respective measurement cell (10) and at least one temporally preceding measurement value M of the same measurement cell (10), with the result that the prediction value P represents a current prediction temperature, compensated by the time delay, in the capturing region (16) of the respective measurement cell (10);
f) determining, for each current prediction value P, a temperature value, corrected by the measurement value error, in the capturing region (16) of the respective measurement cell (10) by means of the processor unit (6) and on the basis of the respective prediction value P, the thermal conductivity and, either directly or indirectly, the current value of the body heat;
g) determining a thermal image by means of the processor unit (6) and on the basis of the current temperature values for the capturing regions (16) of the measurement cells (10); and
h) providing an image signal E by means of the signal interface (8), wherein the image signal E represents the thermal image.

13. Method according to the preceding claim, **characterized in that** the method includes a further step d.1) to be carried out before step e) or f):
d.1) determining a parameter vector representing a heat distribution in the main body (12) by means of the processor unit (6) on the basis of the heat capacity, the thermal conductivity and, either directly or indirectly, the measurement signal.

14. Method according to any of the preceding claims, **characterized in that** the body heat stored by the main body (12) is determined in step d) on the basis of the heat capacity, the thermal conductivity and the prediction values P by means of the processor unit (6).

## Revendications

1. Système (2) de détermination d'une image thermique, ledit système comportant :
un réseau de détecteurs (4),
une unité formant processeur (6), et
une interface de signaux (8),
le réseau de détecteurs (4) comportant un grand nombre de cellules de mesure bolométriques (10) et un corps de base (12) qui a une capacité calorifique prédéterminée, chaque cellule de mesure (10) étant reliée directement ou indirectement au corps de base (12) par une liaison associée (14) qui présente une conductivité thermique prédéterminée de sorte que la chaleur puisse être transmise entre chaque cellule de mesure (10) et le corps de base (12),
chaque cellule de mesure (10) étant conçue pour détecter un rayonnement infrarouge I dans une zone de détection (16) associée à la cellule de mesure respective (10) et étant conçue comme un élément de retard ayant une constante de temps T pour générer une valeur de mesure M qui représente le rayonnement infrarouge détecté I et qui représente une température dans la zone de détection (16) de la cellule de mesure respective (10) et qui comprend une erreur de valeur de mesure due à un flux de chaleur Q sur la liaison (14) de la cellule de mesure respective (10) au corps de base (12),
le réseau de détecteurs (4) étant conçu pour détecter périodiquement un rayonnement infrarouge I au moyen des cellules de mesure associées (10), générer un signal de mesure S qui représente les valeurs de mesure M générées par les cellules de mesure (10), et transmettre le signal de mesure S à l'unité formant processeur (6),
l'unité formant processeur (6) étant configurée pour déterminer une chaleur de corps stockée par le corps de base (12) sur la base de la capacité calorifique, de la conductivité thermique et soit directement soit indirectement du signal de mesure S,
l'unité formant processeur (6) étant configurée pour déterminer, pour chaque valeur de mesure actuelle M de chaque cellule de mesure (10), une valeur de prédiction P, compensée du retard de la cellule de mesure respective (10), sur la base de la valeur de mesure actuelle M de la cellule de mesure respective (10) et d'au moins une valeur de mesure précédente M de la même cellule de mesure (10) de sorte que la valeur de prédiction respective P représente une température prédite actuelle, compensée du retard (16), dans la zone de détection de la cellule de mesure respective (10),
l'unité formant processeur (6) étant configurée pour déterminer, pour chaque valeur de prédiction actuelle P, une valeur de température, corrigée de l'erreur de valeur de mesure, dans la zone de détection (16) de la cellule de mesure respective (10) sur la base de la valeur de prédiction respective P, la conductivité thermique et directement ou indirectement de la valeur actuelle de la chaleur de corps, et
l'unité formant processeur (6) étant configurée pour déterminer une image thermique sur la base des valeurs de température actuelles pour les zones de détection (16) des cellules de mesure (10), et
l'interface de signal (8) étant conçue pour fournir un signal d'image E qui représente l'image thermique.

2. Système (2) selon l'une des revendications précédentes, **caractérisé en ce que** chaque cellule de mesure (10) comporte une couche de capteur destinée à absorber le rayonnement infrarouge I, le corps de base (12) comporte un substrat pourvu d'un circuit de lecture, et chaque cellule de mesure (10) est reliée au corps de base (12) par le biais d'électrodes associées de sorte que les électrodes d'une cellule de mesure (10) forment la liaison (14) de la cellule de mesure respective (10) au corps de base (12).

3. Système (2) selon l'une des revendications précédentes, **caractérisé en ce que** l'unité formant processus (6) est configurée pour déterminer la chaleur de corps, stockée par le corps de base (12), sur la base de la capacité calorifique, de la conductivité thermique et des valeurs de prédiction P.

4. Système (2) selon l'une des revendications précédentes 1 à 2, **caractérisé en ce que** l'unité formant processeur (6) est configurée pour déterminer la chaleur de corps sur la base de la dernière chaleur de corps déterminée, de la capacité calorifique, de la conductivité thermique et soit de l'au moins une valeur de mesure actuelle M soit de l'au moins une valeur de prédiction actuelle P.

5. Système (2) selon la revendication précédente, **caractérisé en ce que** l'unité formant processeur (6) est configurée pour déterminer une température de corps sur la base de la capacité calorifique du corps de base (12) et de la valeur actuelle de la chaleur de corps, et l'unité de processeur (6) étant configurée pour déterminer, pour chaque valeur de prédiction actuelle P, la valeur de température, corrigée de l'erreur de mesure, dans la zone de détection (16) de la cellule de mesure respective (10) sur la base de la valeur de prédiction P de la cellule de mesure respective (10), de la conductivité thermique de la liaison (14) à la cellule de mesure respective (10) et de la valeur actuelle de la température de corps du corps de base (12) .

6. Système (2) selon l'une des revendications précédentes, **caractérisé en ce que** le réseau de détecteurs (4) est conçu de telle sorte que chaque cellule de mesure (10) détecte périodiquement le rayonnement infrarouge I dans la zone de détection associée (16) avec une durée de mesure qui est inférieure à la constante de temps T de la cellule de mesure respective (10) de sorte que chaque valeur de mesure M présente une erreur de retard.

7. Système (2) selon la revendication précédente, **caractérisé en ce que** la constante de temps T de chaque cellule de mesure (10) est déterminée par une résistance thermique de la cellule de mesure respective (10) et une capacité thermique de la cellule de mesure respective (10).

8. Système (2) selon l'une des revendications précédentes 6 à 7, **caractérisé en ce que** la durée de mesure est inférieure à la moitié de la constante de temps T de la cellule de mesure respective (10).

9. Système (2) selon l'une des revendications précédentes, **caractérisé en ce que** l'unité formant processeur (6) est configurée pour déterminer la valeur de prédiction P de la température dans la zone de détection (16) d'une cellule de mesure (10) par extrapolation des valeurs de mesure M de la cellule de mesure respective (10) ou par multiplication d'une valeur de différence, qui est déterminée par la différence entre la valeur de mesure actuelle M de la cellule de mesure respective (10) et une valeur de mesure précédente M de la même cellule de mesure (10), avec un facteur prédéterminé compris entre 0,5 et 0,8, notamment un facteur de 0,632.

10. Système (2) selon l'une des revendications précédentes, **caractérisé en ce que** le réseau de détecteurs (4) est conçu de telle sorte que les cellules de mesure (10) détectent périodiquement le rayonnement infrarouge I dans les zones de détection associées (16) périodiquement avec une fréquence d'au moins 20 Hz.

11. Système (2) selon l'une des revendications précédentes, **caractérisé en ce que** l'unité formant processeur (6) est configurée pour filtrer les valeurs de mesure M, reçues par le biais du signal de mesure S, à l'aide d'un filtre passe-bas de sorte que les valeurs de mesure M résultantes puissent être utilisées pour déterminer la chaleur de corps et/ou les valeurs de prédiction P.

12. Procédé de détermination d'une image thermique au moyen d'un système (2) qui comporte une unité formant processeur (6), une interface de signal (8) et un réseau de détecteurs (4) qui comporte un grand nombre de cellules de mesure bolométriques (10) et un corps de base (12) ayant une capacité calorifique prédéterminée, chaque cellule de mesure (10) étant reliée directement ou indirectement au corps de base (12) par une liaison associée (14) qui présente une conductivité thermique prédéterminée de sorte que la chaleur puisse être transmise entre chaque cellule de mesure (10) et le corps de base (12), chaque cellule de mesure (10) étant conçue pour détecter un rayonnement infrarouge I dans une zone de détection (16) associée à la cellule de mesure respective (10) et étant conçue comme un élément à retard ayant une constante de temps T afin de générer une valeur de mesure M qui représente le rayonnement infrarouge détecté I et qui représente une température dans la zone de détection (16) de la cellule de mesure respective (10) et qui comprend une erreur de mesure qui est due à un flux de chaleur sur la liaison (14) de la cellule de mesure respective (10) au corps de base (12), et le procédé comprenant les étapes suivantes :
a) détecter périodiquement le rayonnement infrarouge I à l'aide des cellules de mesure (10) du réseau de détecteurs (4) ;
b) générer à l'aide du réseau de détecteurs (4) un signal de mesure S qui représente les valeurs de mesure M générées par les cellules de mesure (10) ;
c) transmettre le signal de mesure S du réseau de détecteurs (4) à l'unité formant processeur (6) ;
d) déterminer la chaleur de corps stockée par le corps de base (12) à l'aide de l'unité formant processeur (6) et sur la base de la capacité calorifique, de la conductivité thermique et soit directement soit indirectement du signal de mesure (S) ;
e) déterminer, pour chaque valeur de mesure actuelle M de chaque cellule de mesure (10), une valeur de prédiction P compensée du retard de la cellule de mesure respective (10) à l'aide de l'unité formant processeur (6) et sur la base de la valeur de mesure actuelle M de la cellule de mesure respective (10) et d'au moins une valeur de mesure précédente M de la même cellule de mesure (10) de sorte que la valeur de prédiction P représente une température de prédiction actuelle, compensée du retard, dans la zone de détection (16) de la cellule de mesure respective (10) ;
f) déterminer, pour chaque valeur de prédiction actuelle P, une valeur de température, corrigée de l'erreur de mesure, dans la zone de détection (16) de la cellule de mesure respective (10) à l'aide de l'unité formant processeur (6) et sur la base de la valeur de prédiction respective P, de la conductivité thermique et directement ou indirectement de la valeur actuelle de la chaleur de corps ;
g) déterminer une image thermique à l'aide de l'unité formant processeur (6) et sur la base des valeurs de température actuelles des zones de détection (16) des cellules de mesure (10) ; et
h) fournir un signal d'image E à l'aide de l'interface de signal (8), le signal d'image E représentant l'image thermique.

13. Procédé selon la revendication précédente, **caractérisé en ce que** le procédé comporte une étape supplémentaire d.1) à réaliser avant l'étape e) ou f) :
d.1) déterminer un vecteur de paramètre, représentant une répartition de chaleur dans le corps de base (12), à l'aide de l'unité formant processeur (6) sur la base de la capacité calorifique, de la conductivité thermique et soit directement soit indirectement du signal de mesure.

14. Procédé selon l'une des revendications précédentes, **caractérisé en ce que** la chaleur de corps stockée par le corps de base (12) est déterminée à l'étape d) sur la base de la capacité calorifique, de la conductivité thermique et des valeurs de prédiction P à l'aide de l'unité formant processeur (6).
